# EUROPÄISCHE PATENTSCHRIFT

(11) **EP 2 844 443 B1**
(45) Veröffentlichungstag und Bekanntmachung des Hinweises auf die Patenterteilung: **07.12.2016**
(21) Anmeldenummer: 13776516.0
(22) Anmeldetag: 15.10.2013
(51) Int. Cl.: B27L 5/00, B27D 1/04, B32B 21/14

(54) **FURNIERHOLZMEHRSCHICHT**
MULTILAYER WOOD VENEER
CORPS LAMELLÉ EN BOIS DE PLACAGE

(30) Priorität: 18.10.2012 DE 102012219001; 13.02.2013 DE 102013202319
(43) Veröffentlichungstag der Anmeldung: 11.03.2015
(73) Patentinhaber: Gerlinger, Andrey, 56379 Bergerhof (DE)
(72) Erfinder: Gerlinger, Andrey, 56379 Bergerhof (DE)
(74) Vertreter: Hartig, Michael
(86) Internationale Anmeldenummer: PCT/EP2013/071528
(87) Internationale Veröffentlichungsnummer: WO 2014/060413

(56) Entgegenhaltungen:
- EP-A1- 2 359 996
- CH-A- 173 818
- CN-A- 1 522 940
- CN-Y- 2 887 554
- DE-B- 1 203 938
- DE-C- 763 757
- DE-C- 812 208
- FR-A- 749 935
- GB-A- 835 075
- GB-A- 191 321 560
- US-A- 4 239 577
- US-A- 4 441 954
- US-A1- 2009 162 680

## Beschreibung

Die vorliegende Erfindung betrifft eine Furnierholzmehrschicht, umfassend Holz der sibirischen Lärche, welche erhältlich Ist durch ein Verfahren, umfassend die Schritte (1) Herstellen von mindestens zwei Schälfurnieren, (2) Laminleren der mindestens zwei aus Verfahrensschritt (1) erhaltenen Schälfurniere unter Anbringung einer Kleberschicht, welche zwischen den mindestens zwei Schälfurnieren aufgetragen wird, vorzugsweise unter Verpressen der mittels der Klebeschicht verbundenen Schälfurniere in Radialrichtung (f₂), wobei die mindestens zwei Schälfurniere so zueinander angeordnet sind, dass sich die tangential zu den Jahresringen verlaufende Maserungsrichtung der beiden Schälfurniere im Wesentlichen in die gleiche Richtung erstreck wobei die Laminierung unter Aufbringung eines Drucks von 20 bis 32 kg/cm2 erfolgt, indem die mindesntes zwei Schälfunriere nach Anbringung der Klebeschicht zusammen in Radialrichtung verpresst werden und (3) Schneiden des durch den Verfahrensschritt (2) erhaltenen Laminates Im Wesentlichen senkrecht zu der In Verfahrensschritt (2) aufgetragenen Xlebeschicht und der tangential zu den Jahresringen verlaufenden Maserungsrichtung der Schälfurniere, wobei die resultierende Furnlerholzmehrschicht eine Dichte von mindestens 5 im Wesentlichen stehenden Jahresringen pro 1 cm Breite der Furnlerholzmehrschicht aufweist. Ebenso betrifft die vorliegende Erfindung eine Furnierholzplatte umfassend die erfindungsgemäße Furnlerholzmehrschicht sowie ein Verfahren zur Herstellung der erfindungsgemäßen Furnierholzmehrschicht.

### Beschreibung

Der Querschnitt eines Baumstammes weist verschiedene Zonen auf. Innen befinden sich das Markholz und das Kernholz, weiter außen befindet sich das sogenannte Splintholz, welches bei einigen Baumarten eine andere Farbe aufweist als das Kernholz. Ganz außen befindet sich die Rinde des Baumes. Gleichzeltig weist ein solcher Querschnitt meist sowohl Im Kernholz als auch Im Splintholz eine ringförmige Maserung auf. Diese resultiert aus einer Variation der Tellungsaktivität des Kambiums (Wachstumsschicht zwischen der Splintholzzone und der Rinde), weiche durch Veränderungen der klimatischen Bedingungen (beispielsweise Frühling, Sommer, Herbst, Winter) beeinflusst wird. Eine solche ringförmige Maserung spiegelt die verschiedenen Entwicklungsphasen einer Vegetationsperiode wieder und wird daher auch Jahresringe genannt. In Jedem Jahresring gibt es eine hellere, schneller gewachsene "Frühholzzone" und eine dunklere, schwerere und auch dichtere "Spätholzzone". Das Verhältnis dieser Zonen zu einander sowie auch die gesamte Breite einer periodischen Zuwachszone (eines Jahresringes) werden ebenfalls bedingt durch die klimatischen Bedingungen, so dass dieselbe Baumart je nach Ihrem Wachstumsstandort unterschiedlich dichte Jahresringe aufweisen kann. Hierbei können sich die Eigenschaften des Holzes auch deutlich unterscheiden. Es gilt: je enger die Jahresringe, desto größer ist ihr Spätholzanteil und desto härter und dauerhafter ist das Holz.

Holz ist ausgeprägt anisotrop, das bedeutet, dass die Holzeigenschaften stark von der anatomischen Richtung des Holzes abhängen. Es werden im Allgemeinen drei Hauptachsen in einem Baumstamm unterschieden (siehe Lexikon Werkstofftechnik, hrgs. von Hubert Gräfen, VDI-Verlag GmbH, Düsseldorf 1991; Schlagwort: Holz):
(I) die Faserrichtung (längs der Faser; in Richtung des Stammes langgestreckt; Richtung, In die der Baum in die Höhe wächst) oder longitudinale Richtung des Holzes;
(II) die Radialrichtung (quer zur Faser, parallel zu den Holzstrahlen) oder radiale Richtung des Holzes; und
(III) die Tangentialrichtung (quer zur Faser, parallel zu den Kreistangentialen der Jahresringe) oder tangentiale Richtung des Holzes. (Bei dieser Richtung ist zu beachten, dass man von "Krelstangentialen" spricht, obwohl die Jahresringe eines Baumes niemals einen perfekten Kreis bilden, sondern immer wachstumsbedingt leichte Abweichungen von dieser perfekten Kreisform haben)

Die jeweils zwei aus diesen Achsen gebildeten Schnittflächen unterscheiden sich deutlich in Ihrer Zeichnung und werden als Hirnfläche (Querschnitt durch Baumstamm; Fläche, die durch Radialrichtung und Tangentialrichtung aufgespannt wird), Radialfläche (Riftschnitt; Fläche, die durch Radialrichtung und Faserrichtung aufgespannt wird) und Tangentialfläche (Fladerschnitt; Fläche, die durch Tangentialrichtung und Faserrichtung aufgespannt wird) bezeichnet.

Auf Grund der verminderten Quellung und Schwindung, der erhöhten Oberflächenhärte und dem sich daraus ergebenden verbesserten Standvermögen sind Rifthölzer im Verhältnis zu Brettern der Hirnfläche oder der Tangentialfläche von besonderem Interesse. So beträgt beispielsweise die Schrumpfung eines Brettes der europäischen Eiche bis zu einem Wassergehalt von 12 % in tangentialer Richtung 7,5 % und In radialer Richtung 4,0 %. Die Quellung eines solchen Brettes beträgt in tangentialer Richtung 0,34 % und in radialer Richtung 0,18 %.

Jedoch können nur ca. 10-15 % des Stammholzes zu Rifthölzern verarbeitet werden, da unter diesen Begriff nur Holzteile fallen, welche stehende Jahresringe aufweisen, bei denen also der Winkel zwischen der Kreistangentialen des Jahresringes und der Radialrichtung etwa zwischen 90° und 60° liegt. Man spricht bereits von einem Halbrift, wenn der Winkel zwischen der Kreistangentialen des Jahresringes und der Radialrichtung (Breite des Holzteils) 60° bis 30° beträgt. Daher ist der Preis eines Riftbrettes in der Regel auch 3 bis 4 Mal höher als der eines Tangentialbrettes.

Häufig werden daher aus diesen preislichen Gründen Tangentialbretter oder Mehrschichttangentialbretter verwendet, wobei diese zwar günstiger sind, jedoch auch schlechtere mechanische Eigenschaften als Rifthölzer aufweisen. Insbesondere werden auch bei der Herstellung von Tangentialbrettern höchstens 35 % des Rundholzes verwertet. Das restliche Rundholz geht dabei als Abfall verloren, wodurch auch die Effizienz dieses Verfahrens ebenfalls begrenzt ist.

Ein weiterer Nachteil von Riftbrettern stellt die Tatsache dar, dass sie auf Grund der natürlichen Umstände meist auf eine Länge von 2200 mm, eine Breite von 173 mm und eine Höhe/Stärke von 27 mm begrenzt sind. Dies führt dazu, dass die Anwendungsgebiete solcher Bretter durch deren maximale Größe bestimmt werden.

Eine gängige Methode, Holzteile bereitzustellen, welche größere Dimensionen als die oben genannten Rlftbretter aufweisen, ist das Aufbringen dünner Holzblätter auf Holzplatten. Dabei werden solche Holzblätter (Furniere) durch Schälen, Messern oder Sägen erhalten und weisen meist nur eine Dicke von 1 mm auf. Hierdurch kann insbesondere der Holzabfall reduziert werden, da nahezu das gesamte Holz des Baumstammes verwendetet werden kann. Dieses Furnier wird auf eine Platte wie beispielsweise Sperrholz, Spanplatten oder Holzfaserplatten aufgebracht, welche der Furnierschicht Stabilität verleiht. Solche Platten werden häufig aus Abfallprodukten der Holzindustrie gewonnen und sind daher sehr günstig. Eine fertige Furnierholzplatte weist somit gute mechanische Stabilität auf und erweckt den optischen Eindruck eines echten Vollholzbrettes. Ein solches Verfahren wird beispielsweise in der US 2002/179182 A beschrieben. Solche Furnierholzplatten weisen jedoch in der Regel schlechtere mechanische Eigenschaften auf als vergleichbare Vollholzbretter. Dies liegt insbesondere daran, dass die Furnierholzmehrschichten sehr dünn sind und damit Teile ihrer intrinsischen Eigenschaften verloren gehen. Um solche Furnierholzplatten stabiler auszugestalten werden häufig sogenannte Stäbchen- oder Stablagen zwischen der Trägerplatte (Kernschicht) und der optisch ansprechenden Furnierschicht [Aussenschicht) eingearbeitet. Dabei handelt es sich üblicherweise um eine Lage aus im Wesentlichen gleich geformten, langgestreckten und nebeneinander angeordnet miteinander verleimten Stücken aus Holz oder miteinander verleimten Schichten von Schälfurnieren, die parallel zueinander und senkrecht zur Plattenebene angeordnet werden. Dadurch ergibt sich auf die gesamte Platte bezogen eine kreuzweise bzw. gegeneinander versetzte Anordnung der einzelnen Schichten. Die Deckschicht bzw. Oberfläche (Sichtfläche) bildet die Oberfläche der jeweiligen Decklage. Derart stabilisierte Furnierholzplatten sind beispielsweise beschrieben in der DE 202004005479 U1 und der DE 202009011386 U1.

Um mechanisch belastbare Furnierholzplatten zu erhalten, werden häufig auch mehrere Furnierholzmehrschichten verpresst, wobei beispielsweise die Radialrichtung einer Furnierholzmehrschicht um 90° zu der Radialrichtung der darüber liegenden und darunter liegenden Furnierholzmehrschicht versetzt ist (siehe beispielsweise CN 1522940 A). Bei solchen Platten ist jedoch der optische Aspekt häufig nebensächlich.

Dabei sind Verfahren zur Herstellung von Schichtfurnieren aus Schälfurnieren grundsätzlich bekannt, beispielsweise aus der DE 102009021367 A1 oder der DE 102009021368 A1. Auch hier bildet die jeweilige Oberfläche der Stapelfurniere die Fläche des jeweiligen Abschlußfurniers.

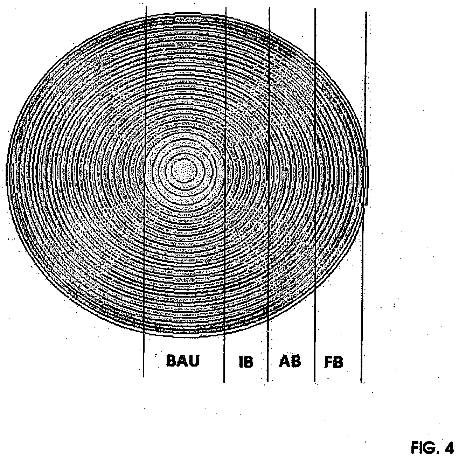

In der DE 1789016 U soll das Problem mangeln der Stabilität miteinander verleimter Schälfurniere dadurch gelöst werden, dass die einzelnen Schälfurnierlagen nach dem Schälen entgegen der natürlichen Wölbung unter Bildung einer Vielzahl von Haarrissen gestreckt werden, worin dann das Klebemittel eindringen kann und so eine Stabiltätssteigerung erreicht wird. Insbesondere sind für dieses Verfahren weiche Holzarten wie Birke, Erle, Linde oder Kastanie geeignet. Harte Holzarten werden als weniger geeignet benannt. Durch die mechanische Überstreckung wird eine (gewünschte) partielle Zerstörung der natürlichen Holzstruktur erreicht, was sich Jedoch naturgemäß nachteilig auf die Gesamtstabilität bzw. Festigkeit des Materials auswirken muss. Auch hier wird unterschiedslos eine Ausrichtung der einzelnen Furniere in gleicher Richtung sowie kreuzweise gegeneinander versetzt offenbart und das Abschlußfurnier bildet die Deckfurnierlage, wie aus Figur 4 ersichtlich. Somit wird auch hier als Sicht-/Oberfläche die Fläche des Deckfurniers vorgesehen.

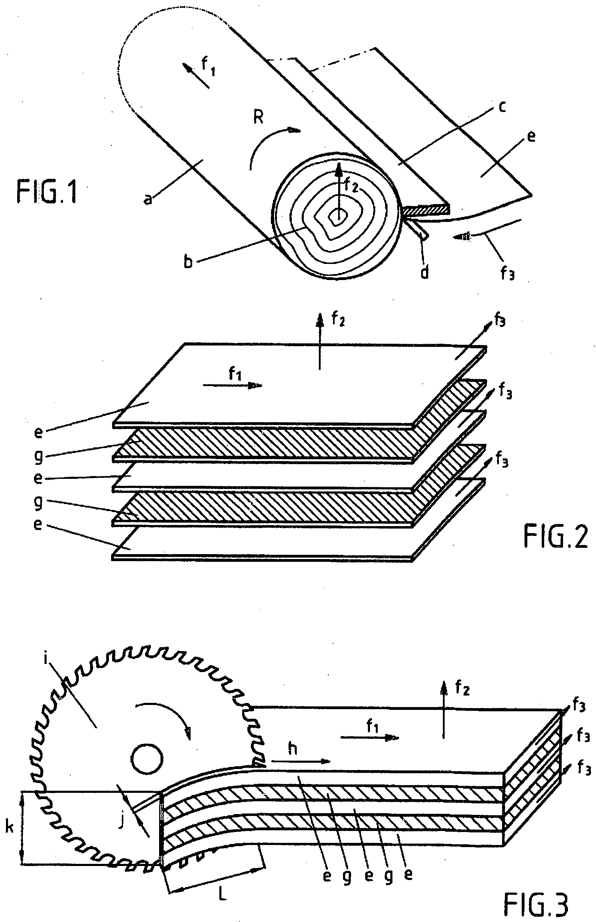

Die US 5,040,582 offenbart laminierte Furnierschichthölzer aus mindestens zwei unterschiedlichen Holzarten, die eine hohe dimensionale Stabilität aufweisen. Durch die Verwendung von mindestens zwei unterschiedlichen Holzarten tritt das Problem erhöhter Materialspannungen aufgrund unterschiedlicher Schrumpfungs- und Expansionseigenschaften und unterschiedlichen Materialdichten der verschiedenen Holzarten auf. Dieser Nachteil soll minimiert werden, indem jeweils zwei Furnierschichten derselben Holzart paarweise miteinander verbunden werden, wobei jeweils die Schälseiten, also die von der Stammaußenseite betrachtet innenliegende Schicht, die beim Aufspannen zu einer flachen Furnierschicht die stärkere Biegung erfährt, miteinander verbunden werden. Auch hierin wird die verbesserte Stabilität maßgeblich durch das Eindringen des Klebstoffs in die beim Aufspannen der gewölbten Schichten entstehenden Strukturrisse beeinflusst. Eine spezifische Ausrichtung der Furniere wird nicht erwähnt, aus Figur 1 wird ersichtlich, dass auch hier die Fläche des Abschlußfurniers die Sicht-/Oberfläche bildet.

Die DE 10201038 A1 beschreibt Schichtwerkstoffe, beispielsweise zur Herstellung von Platten, worin eine Mittellage mit einem oder mehreren Paaren von Furnierblättern beschichtet wird. Die Anordnung der Furnierblätter erfolgt auch hier paarweise und kongruent/deckungsgleich, hierin jedoch bezogen auf die Symmetrie des Querschnitts der Platte, wie z.B. aus Figur 2 ersichtlich. Durch diese paarweise und kongruente Anordnung der Furnierschichten soll eine symmetrische Spannungsverteilung und damit verbesserte Stabilität gegenüber Feuchteverzug erreicht werden. Die Deckfläche (Oberfläche) der so erhältlichen Schichtfurniere wird hier durch die Oberfläche eines Abschlußfurniers gebildet. Aus Figur 2 und den entsprechenden Bezugszeichen hierzu wird deutlich, dass auch eine kreuzweise versetzte Anordnung der einzelnen Furnierblätter vorgesehen ist.

Gegenstand der DE 19951035 C1 sind flexible Starkfurnierkanten mit einem mehrschichtigen Aufbau unterschiedlicher Materialien, umfassend eine Aussenschicht aus Stauchholz und mindestens eine weitere (innere) Schicht aus Messerfurnier die zum Anleimen als reines Kantenfurnier mit hoher Flexibilität vorgesehen Ist. Auch hier bildet die Oberfläche einer außenliegenden Furnierschicht die Außenschicht bzw. sichtbare Deckschicht. Eine spezifische Anordnung der Messerfurnierschichten wird nicht erwähnt und erscheint auch nicht maßgeblich, da das Ziel der Erfindung darin liegt, flexible Furnierkanten zu erhalten.

Die DE 801.3404 U1 offenbart ein Furnierschichtholz mit parallelem Faserverlauf, welches sich ohne Festigkeitseinbuße kontinuierlich herstellen lässt, indem die Einzellagen aus endlos aneinandergelegten Furnieren gebildet werden. Aus der einzigen Abbildung wird ersichtlich, dass ein so erhältliches Schichtfurnier in Längsrichtung zahlreiche Stossfugen aufweist. Bei Ausübung einer Druckbelastung auf die Längsseite (in der Figur oben liegende Kantenseite mit den sichtbaren Schichten), wie es bei der vorliegenden Erfindung vorgesehen ist, würden solche Stossfugen ersichtlich eine Vielzahl von Schwächungspunkten bilden, da eine entsprechende Druckbelastung ein Auseinanderscheren der schrägen Schnitt-/Leimflächen bewirken würde. Es ist anzunehmen, dass auch bei derartigen Schichtfurnieren die außenliegenden Deckfurniere die Sichtfläche bilden, da andernfalls die innenliegenden Stosskanten optisch nachteilig wirken.

Schließlich offenbart die DE 102009038851 A1 ein Holz mit über die gesamte Stücklänge hinweg (entlang der Kantenfläche) geradlinig verlaufender Maserung, welches erhältlich ist durch Verleimen und Verpressen mehrerer Schichten von Schälfurnieren. Dadurch soll erfindungsgemäß ein Holz mit ansprechender geradliniger Maserungsoptik geschaffen werden, welches stabiler ist als aus einem Stamm gefertigtes Holz mit geradlinig verlaufender Maserung. Ein spezifischer Hinweis auf eine bevorzugte Ausrichtung der einzelnen Furnierschichten (radial oder tangential zu den Jahresringen) ergibt sich hieraus nicht, so wie auch Jeglicher Hinweis auf einen möglichen Einfluss der erfindungsgemäßen Anordnung auf die Festigkeit der erhältlichen Hölzer fehlt. Abgestellt wird lediglich auf die ansprechende Optik der geradlinigen Maserung sowie generell auf eine Stabilltätsverbesserung, wobei Stabilität nicht mit Festigkeit, insbesondere Druckfestigkeit, gleichgesetzt werden kann. Zu der hierin beschriebenen Presslaminierung wird kein spezifischer Druck erwähnt oder ein Einfluss desselben auf eine mögliche Verbesserung der Festigkeit der resultierenden Hölzer.

Somit wird in allen im Stand der Technik bisher offenbarten Ausgestaltungen von Schichtfurnieren eine spezifische, bezogen auf die Tangential- oder Radialrichtung richtungsgebundene Anordnung der einzelnen Schichten zueinander entweder nicht erwähnt, bzw. zwischen diesen beiden Richtungen wird nicht weiter unterschieden. Zahlreiche Dokumente sehen auch per se eine Anordnung in untereinander versetzten Richtungen explizit vor. Es wurde jedoch überraschend gefunden, dass gerade die spezifische Ausrichtung, nämlich In Tangentialrichtung, d.h. In Richtung (f₃) der Figuren maßgeblich Ist, um eine verbesserte Druckfestigkeit In Tangentialrichtung zu erhalten, da gerade in dieser Richtung die Druckfestigkeit überraschend am höchsten ist. Auch die Anwendung eines spezifischen Mindestdruckes beim Laminieren der Schichten trägt positiv zur Verbesserung der Festigkeit bei. Vor diesem Hintergrund wird die erfindungsgemäße Furniermehrholzschicht auch nicht wie im Stand der Technik üblich mit der Oberfläche einer Abschlußfurnierschicht als Sichtfläche eingesetzt, sondern mit der spezifischen Kantenseite mit den sichtbaren Furnierschichten, und zwar explizit mit der Kante, worin die einzelnen Furnierschichten entlang der Richtung f₁ aus den Figuren verlaufen.

Die CH 173 818 wird als nächstliegender Stand der Technik angesehen und beschreibt ein Verfahren, bei dem aus einem Nadelbaum zunächst ein Schälfurnier hergestellt wird. Die erhaltenen Furniere werden in der Faserrichtung in kontinuierlichen Furnierbahnen zusammengesetzt. Diese Furnierbahnen werden dann so angeordnet, dass die Stoßfugen versetzt zueinander liegen. Die Schälfurniere sind so zueinander angeordnet, dass sich die Maserungsrichtung im Wesentlichen in die gleiche Richtung erstreckt. Die einzelnen Bahnen werden auf entsprechende Größe geschnitten, verleimt und verpresst. Im Anschluss werden die oben beschriebenen Lamellentafeln erhalten, indem die Blöcke durch Schnitte in der Richtung der Holzfasern und senkrecht zu den Tafelebenen zerteilt werden. Damit erfolgt daher ein Schnitt senkrecht zu der Maserungsrichtung.

Ausgehend von diesem Stand der Technik lag der vorliegenden Erfindung somit die Aufgabe zu Grunde, mindestens einen, bevorzugt mehrere der Nachteile des Standes der Technik zu beheben. Insbesondere lag der vorliegenden Erfindung die Aufgabe zu Grunde, eine Furnlerholzmehrschicht bereitzustellen, deren Oberfläche eine vergleichbare, vorzugsweise bessere Standfestigkeit und Insbesondere eine verbesserte Druckfestigkeit senkrecht zur erfindungsgemäßen Arbeitsfläche (Oberfläche), wie/als ein Riftholz aufweist, dabei aber Insbesondere günstiger ist als ein Riftholz. Dabei soll die Furnierholzmehrschicht insbesondere so günstig sein wie gängige Tangentialbretter, gleichzeitig Jedoch eine vergleichbare oder gar bessere Standfestigkeit und/oder Qualität wie Rifthölzer aufweisen.

Die erfindungsgemäßen Aufgaben wurden überraschend gelöst durch die Bereitstellung einer Furnierholzmehrschicht, umfassend Holz der sibirischen Lärche, wobei die Furnlerholzmehrschicht erhältlich Ist durch ein Verfahren, umfassend die folgenden Schritte (die Verweise beziehen sich auf die Figuren 1 bis 7):
(1) Herstellen von mindestens zwei Schälfurnieren (e);
(2) Laminieren der mindestens zwei aus Verfahrensschritt (1) erhaltenen Schälfurniere (e) unter Anbringung einer Klebeschicht (g), welche zwischen den mindestens zwei Schälfurnieren (e) aufgetragen wird, wobei die mindestens zwei Schälfurniere so zueinander angeordnet sind, dass sich die tangential zu den Jahresringen verlaufende Maserungsrichtung der beiden Schälfurniere (fₐ) Im Wesentlichen In die gleiche Richtung erstreckt 32 kg/cm2 erfolgt, indem die mindesntes zwei Schälfunriere nach Anbringung der Klebeschicht zusammen in Radialrichtung verpresst werden: und
(3) Schneiden des durch den Verfahrensschritt (2) erhaltenen Laminates Im Wesentlichen senkrecht zu der in Verfahrensschritt (2) aufgetragenen klebeschicht (g) und der tangential zu den Jahresringen verlaufenden Maserungsrichtung der Schälfurniere (f₃), um die Furnierholzmehrschicht zu erhalten, wobei die resultierende Furnierholzmehrschicht eine Dichte von mindestens 5 im Wesentlichen stehenden Jahresringen pro 1 cm Breite (k) der Furnierholzmehrschicht aufweist und wobei die Breite (k) der Furnierholzmehrschicht als die Ausdehnung der Furnierholzmehrschicht senkrecht zur Klebstoffschicht definiert ist. Die Arbeitsfläche oder Oberfläche bildet dabei die durch die Richtungen f₁ und f₂ aufgezogene Fläche (A) in den Figuren.

Ebenso werden die erfindungsgemäßen Aufgaben gelöst durch die Bereitstellung einer Furnierholzplatte umfassend einen Träger und die erfindungsgemäße Furnierholzmehrschicht, sowie einer Furnierholzplatte ohne Träger aus mindestens zwei der erfindungsgemäßen Furnierholzmehrschichten, die über Ihre Kanten unter Verpressen miteinander verklebt und gegebenenfalls in mehreren zueinander Jeweils um 90° versetzt angeordneten Schichten zusammengefügt werden, sowie durch das Verfahren zur Herstellung der erfindungsgemäßen Furnierholzmehrschicht.

### Furnierholzmehrschicht

### Sibirische Lärche

Die sibirische Lärche (*Larix sibirica,* auch russische Lärche genannt) gehört zur Gattung der Lärchen und ist in Russland und der Mongolei heimisch. Die sibirische Lärche ist hart und dauerhaft. Auf Grund des hohen Harzgehaltes Ist das Holz der sibirischen Lärche zusätzlich sehr witterungsbeständig. Im Sinne der vorliegenden Erfindung zählen zur sibirischen Lärche Insbesondere auch alle Unterarten. Diese können vorzugsweise ausgewählt werden aus der Gruppe, bestehend aus *Larix sibirica subsp. altalca* (Szafer), *Larix sibirica subsp. jenisseensis, Larix sibirica subsp. obensis Suk., Larix sibirica subsp. rossica, Larix sibirica subsp. sibirica* und *Larix sibirica subsp. sukaczewil.* Ebenso werden unter den Begriff sibirische Lärche insbesondere auch alle Varietäten verstanden. Die Varietäten werden bevorzugt ausgewählt aus der Gruppe, bestehend aus *Larix sibirica var. balcalensis, Larix sibirica var. lenesis, Larix sibirica var. polaris, Larix sibirica var. sajanensis* und *Larix sibirica var. transbalcalensis.*

Bevorzugt wird unter der sibirischen Lärche eine Lärche verstanden, welche aus dem Wuchsgebiet stammt, welches ausgewählt wird aus der Gruppe, bestehend aus dem Irkutsker Gebiet, Krasnoyarsker Gebiet und Yakutien.

Die sibirische Lärche hat eine mittlere Rohdichte von etwa 665 kg/m³ (bei einer Feuchte von 12 bis 16 %). Sie hat einen hohen Spätholzanteil, wodurch dieses schwere Holz mit einer mittleren Jahressringbrelte von 0,8 bis 2 mm erzielt wird. Der Spätholzanteil ist dichter, schwerer und fester als der Frühholzanteil und von der Spätholzanteilmenge hängt maßgeblich die Farbe, Dichte und Festigkeit des Holzes ab. Die durch die jeweiligen Früh- und Spätholzanteile in unterschiedlichen Holzarten bedingten Eigenschaftsunterschiede sind nachfolgend in Tabelle 1 beispielhaft für Holz der sibirischen Lärche und Eichenholz dargestellt.

**Tab. 1**

| Holzart | Holzanteilszone | Dichte des darrtrockenen Holzes | Volumen Gewichtsverlust [%] | Festigkeitsgrenze [kg/cm2] längs der Faser im Zimmer-trockenen Zustand | |
|---|---|---|---|---|---|
| | | | | Ausdehnung | Restbruch |
| Lärche | Frühanteil | 0,383 | 12,4 | 442 | 483 |
| | Spätanteil | 0,863 | 22,8 | 1510 | 2509 |
| Elche | Frühantell | 0,500 | 16,4 | 660 | 714 |
| | Spätanteil | 0,726 | 22,2 | 1526 | 1800 |

Der Festigkeitswert des Spätholzanteiles ist jeweils wesentlich besser als der Frühholzanteil. Dieser physische Unterschied markiert deutlich die jeweilige Jahresringgrenze. Hieraus folgt, dass die durchschnittliche Festigkeitsgrenze und der Festigkeitswert maßgeblich vom prozentualen Verhältnis des Früh- und Spätholzanteiles des jeweiligen Holzes abhängt. Durch das erfindungsgemäße Verfahren ist es beispielsweise möglich, (durch das Verpressen beim Laminieren) eine Verminderung des Frühholzanteiles um 20 % erreichen, wodurch die Integrierte Festigkeitgrenze des Restbruches längs der Faser um 21% von 1192 bis zu 1445 kg/cm² erhöht wird (unter der Bedingung, dass die umfasste Oberfläche des Früh- und Spätholzanteiles 65% bzw. 35% entspricht). Für einen Fall also, bei dem eine ursprüngliche Verteilung von 65 % Frühholzanteil und 35 % Spätholzanteil mit einer ursprünglichen durchschnittlichen Festigkeit von 1192 kg/cm² vorliegt, ergibt sich bei Verminderung des Frühholzanteiles (durch Verpressen) bei konstantem Spätholzanteil eine insgesamt um etwa 21% (bis zu 1445 kg/cm²) erhöhte Festigkeitsgrenze.

Dabei Ist maßgeblich, dass die Festigkeitseigenschaften fast aller Holzarten in Radial- und Tangentialrichtung unterschiedlich sind. Insbesondere weisen Nadelhölzer (wie z.B. Lärche, Kiefer, Fichte, Tanne) in Tangentialrichtung eine durchschnittlich 1,5-mal größere definierte Festigkeitsgrenze als In Radialrichtung auf und diese beträgt ca. 1/10 der Festigkeitsgrenze längs der Faser (Holzforschung, www.drevesinas.ru). Die Hauptursache hierfür ist die höhere Heterogenität der Jahresringbildung aufgrund der in Ihren physikalischen Eigenschaften unterschiedlichen Früh- und Spätholzanteile. Die Festigkeitseigenschaften für Radial- und Tangentialrichtung für Lärche, Kiefer und Eiche sind nachfolgend In der Tabelle 2 dargestellt.

**Tab. 2**

| Holzart | Definierte Festigkeitsgrenze [kg/cm²] beim Pressen quer der Faser in | |
|---|---|---|
| | Radialrichtung | Tangentialrichtung |
| Lärche | 44 | 63 |
| Kiefer | 34 | 51 |
| Eiche | 76 | 56 |

Wie bei natürlichem Holz üblich, weisen die Jahresringe eine im Wesentlichen kreisrunde Form auf, wobei es jedoch beispielsweise durch den Standort des Baumes im Wald und eine dadurch resultierende örtliche Variation In der Sonneneinstrahlung zu Abweichungen von dieser Kreisform kommen kann. Im Sinne dieser Erfindung wird dennoch von der tangential zu den Jahresringen verlaufenden Richtung oder den entsprechenden Tangentialen gesprochen. Hierbei ist es selbstverständlich, dass dieses Merkmal Abweichungen der Jahresringe von der Kreisform (z.B. bei Drehwüchsigkeit) mit einschließt. Es handelt sich somit um die in Figur 1 dargestellte Richtung f₃, welche somit insbesondere auch als Kreistangente zum in Richtung R rotierenden Zylinder des Baumstammes bezeichnet werden kann.

Es hat sich überraschenderweise herausgestellt, dass die erfindungsgemäße Furnierholzmehrschicht, umfassend Holz der sibirischen Lärche; das gleiche, bevorzugt ein besseres Standvermögen sowie eine bessere Druckfestigkeit aufweist wie ein Riftholz. Dabei weist die erfindungsgemäße Furnierholzmehrschicht bevorzugt das gleiche, besonders bevorzugt ein besseres Standvermögen auf als ein Riftholz der sibirischen Lärche. Insbesondere hat sich also herausgestellt, dass die erfindungsgemäße Furnierholzmehrschicht eine erhöhte Druckfestigkeit in Radialrichtung, also senkrecht zu den stehenden Jahresringen (in Richtung f₂ der Figuren) aufweist. Darüber hinaus hat sich überraschend gezeigt, dass eine noch weitere Erhöhung der Druckfestigkeit In Tangentialrichtung, also in Richtung f₃ der Figuren, erreicht werden kann. Die Tangentialrichtung bezeichnet dabei die Richtung, die senkrecht zu der durch die Richtungen f₁ und f₂ In den Figuren aufgezogenen Fläche steht. Dies ist die erfindungsgemäß eingesetzte Sicht-, Ober- oder Arbeitsfläche (Aufsicht; A in den Figuren).

Zusätzlich hat sich überraschenderweise herausgestellt, dass mit der erfindungsgemäßen Furnierholzmehrschicht der bei nahezu allen Nadelholzarten auftretende Harzdurchtritt verhindert werden kann. Dieser ist Insbesondere bei Rifthölzern der sibirischen Lärche bekannt. Nadelhölzer, Insbesondere Lärchen weisen einen hohen Harzgehalt auf. Bei der Trocknung tritt dieses Harz aus und es kann zu Verlaufsstörungen und Holzrissen kommen. Aus diesem Grund ist Nadelholz auch ungeeignet für die Herstellung von Möbeln.

Die erfindungsgemäße Furnierholzmehrschicht weist die Probleme des Harzdurchtrittes nicht auf. Dabei kann sogar zusätzlich das Harz der sibirischen Lärche bei der Herstellung der erfindungsgemäßen Furnierholzmehrschichtschicht (insbesondere während des Verfahrensschrittes (1)) gewonnen werden. Es hat sich herausgestellt, dass das Harz ein wertvolles Produkt für die kosmetische und medizinische Industrie darstellt. Aus dem Harz können insbesondere die Antioxidantien Arabinogalactan und/oder Taxifolin gewonnen werden. Auch dadurch sind das erfindungsgemäße Verfahren und die so hergestellte Furnierholzmehrschicht besonders effizient.

Zusätzlich hat sich herausgestellt, dass die erfindungsgemäße Furnierholzmehrschicht eine vergleichbar hohe Lichtdurchlässigkeit entlang der stehenden Jahresringe (in Richtung f₁ und f₃ in Figur 3) aufweist. Dabei weisen die verdichteten Holzbereiche (Spätholz) der stehenden Jahresringe eine geringere Lichtdurchlässigkeit auf als die die Jahresringe umgebenden Holzzonen (Frühholz).

Unter dem Standvermögen eines Holzes wird Im Sinne der vorliegenden Erfindung insbesondere mindestens eine Eigenschaft des Holzes verstanden, welche ausgewählt wird aus der Gruppe der Quellung, der Schwindung, der Oberflächenhärte, der Wärmeleitfähigkeit, der Widerstandsfähigkeit gegenüber Schädlingen, der Witterungsbeständigkeit (insbesondere gegenüber Regen, Schneesturm, Hagelschlag und Sonne), der Abnutzungsresistenz, der Druckfestigkeit (gemessen parallel (entlang) zu den stehenden Jahresringe (Richtung f₁ und f₃ der Figuren) und/oder im rechten Winkel zu den stehenden Jahresringen (Richtung f₂ der Figuren) und beliebigen Kombinationen dieser Eigenschaften. Bevorzugt wird unter dem Standvermögen des Holzes eine Dauerhaftigkeitsklasse nach DIN EN 350-2 von 2 bis 4, ganz besonders bevorzugt 2 bis 3 verstanden.

Die erfindungsgemäße Furnierholzmehrschicht weist dabei eine Dichte von mindestens 5, bevorzugter mindestens 8, ganz besonders bevorzugt mindestens 10 im Wesentlichen stehenden Jahresringen pro 1 cm Breite der Furnierholzmehrschicht auf. Die erfindungsgemäße Furnierholzmehrschicht weist somit mindestens die gleiche oder eine größere Anzahl an Jahresringen pro 1 cm Breite auf wie ein vergleichbares Riftholz der sibirischen Lärche. Vorzugsweise weist die erfindungsgemäße Furnierholzmehrschicht eine höhere Dichte auf als ein vergleichbares Riftholz der sibirischen Lärche. Insbesondere ist es möglich, eine erfindungsgemäße Furnierholzmehrschicht bereitzustellen, welche die gleiche optische Erscheinung aufweist wie ein Riftholz der sibirischen Lärche.

Gleichzeitig erlaubt es jedoch das erfindungsgemäße Verfahren, dass die Verwertung des Baumstammes der sibirischen Lärche wesentlich höher ist als die bei der Herstellung eines Riftholzes. Damit wird zum einen der Holzabfall bei der Herstellung der erfindungsgemäßen Furnierholzmehrschicht reduziert. Zum anderen wird damit auch die Effizienz des Herstellungsverfahrens optimiert und dadurch das Verfahren insgesamt günstiger. Zusätzlich werden durch das Herstellungsverfahren Furnierholzmehrschichten bereitgestellt, welche ein gleichmäßiges Aussehen aufweisen. Je nachdem, in welcher Umgebung ein Baum wächst, weisen die Jahresringe eine asymmetrische Form auf. Wächst ein Baum in der Mitte eines Waldes, so sind die Jahresringe im Wesentlichen gleichmäßig über den Querschnitt des Baumes verteilt. Wächst der Baum jedoch am Rande des Waldes, insbesondere zur Südseite, so wächst die nach außen zeigende Seite pro Wachstumsperiode mehr. Dies bedeutet, dass die Jahresringe eines solchen Baumes asymmetrisch sind. Werden aus solchen Bäumen Rifthölzer gewonnen, so ist ihre Standfestigkeit geringer als die eines Riftholzes eines symmetrisch gewachsenen Baumes. Die erfindungsgemäße Furnierholzmehrschicht weist immer eine Jahresringdichte von mindestens 5 Jahresringen pro 1 cm Breite auf, so dass ihre Standfestigkeit immer gleich bleibt. Dadurch kann der beschrieben "natürliche Ausschuss" asymmetrisch gewachsener Bäume vermieden werden, wodurch das Verfahren ebenfalls effizienter wird. Da sich die Jahresringdichte von einem bestimmten Abstand vom Zentrum des Baustammes zur Rinde hin im Wesentlichen logarithmisch erhöht, ist eine Dichte von mindestens 3 Jahresringen pro 1 cm Breite des Rundholzes besonders günstig für die physikalischen Eigenschaften der daraus erhältlichen Furnierholzmehrschicht. Bevorzugt ist auch eine Dichte von mindestens 5 und mehr Jahresringen, ganz besonderes bevorzugt von 7 und mehr Jahresringen pro 1 cm Breite des Rundholzes.

Im Sinne der vorliegenden Erfindung wird unter im Wesentlichen stehenden Jahresringen ein Holz verstanden, welches optisch einem Riftholz entspricht. Dies bedeutet, dass unter stehenden Jahresringen bevorzugt solche verstanden werden, welche einen Winkel von 60° bis 90°; besonders bevorzugt von 70° bis 90°, ganz besonders bevorzugt von 80° bis 90° zur Breite (k) der Furnierholzmehrschicht aufweisen.

Dabei bedeutet der Begriff "im Wesentlichen" im Sinne der vorliegenden Erfindung, dass eine Abweichung von ± 30°, bevorzugt ± 15°, besonders bevorzugt ± 10°, ganz besonders bevorzugt ± 5° gemeint ist. Bevorzugt bedeutet der Begriff "im Wesentlichen" im Sinne der vorliegende Erfindung, dass eine Abweichung von ± 15°, besonders bevorzugt ± 10°, ganz besonders bevorzugt ± 5° gemeint Ist.

Die erfindungsgemäße Furnierholzmehrschicht kann neben der sibirischen Lärche auch mindestens eine weitere Holzart umfassen. Insbesondere kann diese mindestens eine weitere Holzart ausgewählt werden aus der Gruppe, bestehend aus Eichen, Kiefern, Douglasie, Tanne, Zeder, Eibe und Fichte sowie Esche, Courbaril (Hymenaea, Animebäume), Zebrano, Wenge, Kempas (Koompassla malaccensis), Cumary, Cordla ssp (Kordien), Merbau (Borneo Teak), Olivenholz, Walnussbaum, Pericopsis mooniana (Nandu Wood, Nedun Tree), Afrikanish Padouk, Burma Padouk, Machaerium scleroxylon (Santos Rosewood, Palisander, Rosenholz), Panga Panga, Pyinkado, Sapelli (Sapelli Mahagoni), Sassafras, Sucupira, Bagassa guianensis Aulb, Teak, Lombardy poplar (Populus niger, Schwarz-Pappel), Buchsbaum, Jakarandaholz (Palisander), Ebenholz, Manikara fasciculate, Eucalyptus. Die Auswahl mindestens einer weiteren Holzart kann dabei aufgrund optischer Gesichtspunkte zur Erzielung eines speziellen optischen Erscheinungsbildes der resultierenden Furnierholzmehrschicht erfolgen. Unter physikalischen Gesichtspunkten ist die mindestens eine weitere Holzart bevorzugt ausgewählt aus Kiefern, Douglasie, Tanne, Zeder, Eibe und Fichte. Besonders bevorzugt besteht die erfindungsgemäße Furnierholzmehrschicht aus Holz der sibirischen Lärche. Dies meint insbesondere, dass es bevorzugt ist, dass sämtliche Schälfurnierschichten (e), die zur Herstellung eines erfindungsgemäßen Furnierholzmehrschicht verwendet werden, aus Holz der sibirischen Lärche gefertigt sind.

### Verfahrensschritt (1)

Im Verfahrensschritt (1) werden mindestens zwei Schälfurniere (e) hergestellt. Das zu verarbeitende Holz wird nach dem Fachmann bekannten Methoden vorbehandelt. Dabei wird der Baumstamm insbesondere von der Rinde befreit. Bevorzugt weist der Baumstamm dabei seine Elgenfeuchtigkeit auf. Dabei weist das Holz bevorzugt eine Elgenfeuchtigkeit von 40 % bis 60 % auf.

Die Herstellung eines Schälfurniers kann über die bekannten Methoden erfolgen. Figur 1 stellt ein solches Verfahren schematisch dar. Dabei wird ein geschälter Baumstamm (a) längs seiner Faserrichtung in der Rotationsrichtung (R) rotiert. Es wird ein Druckbalken (c) an den Baumstamm angelegt. Ein Messer (d) schält nun Schälfurnierschichten (e) vom Baumstamm ab. Dabei erfolgt das Abschälen tangential zu den Jahresringen (b) in Richtung (f₃) (auch als tangential zu den Jahresringen verlaufende Maserungsrichtung bezeichnet). Dabei wird im Folgenden die Seite des Schälfurniers (e), welche zum Messer (d) zeigt, als Innenseite des Schälfurniers (e) bezeichnet und die Seite, die zum Druckbalken (c) zeigt, als Außenseite des Schälfurniers (e).

Auf diese Weise kann nahezu der gesamte Baumstamm zu einem Schälfurnier verwertet werden. Hieraus resultiert zum einen eine geringe Abfallproduktion. Um Furnierholzmehrschichten mit besonders gleichmäßiger Härte und hoher Dauerhaftigkeit zu erhalten, erfolgt bevorzugt eine Sortierung der Schälfurniere. Dabei sind besonders bevorzugt die Schälfurniere, die aus den Bereichen nahe der Rinde des Baumstammes gewonnen werden, da hier die Jahresringdichte in der Regel besonders hoch ist. Die Auswahl der Schälfurniere hängt somit maßgeblich von der gewünschten Dichte der Jahresringe pro 1 cm Breite (k) in der resultierenden Furnierholzmehrschicht ab, die wiederum maßgeblich mit dem gewünschten Verwendungsbereich der Furnierholzmehrschicht zusammenhängt. So sind insbesondere Schälfurniere mit einer Dichte von mindestens 3 im Wesentlichen stehenden Jahresringen pro 1 cm Breite zur Herstellung von Furnierholzmehrschichten zur Herstellung von Möbeln und zur Innenausstattung von Räumen bzw. zur Anwendung im Innenbereich ausreichend. Zur Anwendung im Außenbereich sind besonders Schälfurniere mit einer Dichte von mindestens 5 im Wesentlichen stehenden Jahresringen pro 1 cm Breite zur Herstellung der Furnierholzmehrschicht geeignet. Schälfurniere mit einer Dichte von mindestens 7 und mehr im Wesentlichen stehenden Jahresringen pro 1 cm Breite eignen sich besonders zur Herstellung von Furnierholzmehrschichten für die Herstellung von Fußbodenbelägen wie Laminaten, Parkett und sonstigen Bodenbelägen. Die verschiedenen Zonen und die bevorzugten Verwendungsbereiche der daraus erhältlichen Furnierholzmehrschichten sind beispielhaft in Figur 4 dargestellt. Darin bezeichnet FB eine bevorzugte Verwendung als Fußbodenbelag aufgrund der höchsten Dichte an Jahresringen, AB eine bevorzugte Verwendung im Außenbereich aufgrund der immer noch sehr hohen Dichte an Jahresringen, IB eine bevorzugte Verwendung im Innenbereich, da hier eine weniger starke Belastung anzunehmen ist als bei Anwendungen Im Außenbereich und bei Fußbodenbelägen und diese hier somit trotz einer geringeren Dichte an Jahresringen gut eingesetzt werden können. BAU bezeichnet eine Zone mit geringem Jahresringanteil und geringer und ungleichmäßiger Dichte. Dieser Bereich des Rundholzes ist für die vorliegende Erfindung praktisch ungeeignet, kann Jedoch noch im Baubereich Anwendung finden.

Ebenso kann in Verfahrensschritt (1) optional das Harz der sibirischen Lärche gewonnen werden. Dieses stellt insbesondere in der kosmetischen wie auch medizinischen Industrie ein wichtiges Ausgangsprodukt zur Herstellung von Antioxidantien dar. Auch dadurch wird der Verfahrensschritt (1) besonders effizient.

Es hat sich herausgestellt, dass insbesondere die sibirische Lärche besonders geeignet ist, um Schälfurniere mit einer ausreichenden Festigkeit und hohen Dichte an Jahresringen herzustellen, da sie bereits eine ausreichende Festigkeit hohe Dichte an Jahresringen aufweist. Zum anderen ist die Größe des resultierenden Schälfurniers im Wesentlichen nur von der Länge des Baumstammes in Faserrichtung (also der Höhe des Baumes) begrenzt. Damit ist es möglich, dass die Schälfurniere insbesondere eine größere Dimension aufweisen als Rifthölzer. Bevorzugt wird dabei ein Stamm verwendet, welcher Äste von höchstens 20 mm, besonders bevorzugt höchstens 10 mm Durchmesser aufweist. Dabei ist es bevorzugt, dass es sich hierbei um gesunde Äste, das heißt insbesondere, nicht abgestorbene Äste handelt. Ganz besonders bevorzugt handelt es sich um einen astfreien Stamm.

Die hergestellten Schälfurnierschichten weisen bevorzugt eine Dicke von 1,0 bis 2,5 mm, besonders bevorzugt von 1,2 bis 2,3 mm und ganz besonders bevorzugt von 1,4 bis 2,1 mm auf. Dabei umfasst eine Schölfurnierschicht bevorzugt mindestens einen, besonders bevorzugt mindestens zwei, ganz besonders bevorzugt mindestens 3 tangential in Richtung (f₃) verlaufende Jahresringe.

Die Schälfurnierschichten (e) können Im Anschluss auf eine geeignete Größe zugeschnitten werden. Die Größe ist von der späteren Verwendung der Furnierholzmehrschicht, Insbesondere der Größe der Presse In Verfahrensschritt (2) abhängig.

Nach dem Verfahrensschritt (1) werden die Schälfurnierschichten (e) vorzugsweise getrocknet. Dies kann Insbesondere durch die dem Fachmann bekannten Verfahren erreicht werden. Bevorzugt weisen die Schälfurnierschichten (e) nach Verfahrensschritt (1) eine Restfeuchte von höchstens 12 Gew.-%, besonders bevorzugt höchstens 10 Gew.-%, ganz besonders bevorzugt von 6 bis 8 Gew.-% auf.

### Verfahrensschritt (2)

Der Verfahrensschritt (2) umfasst das Laminieren der mindestens zwei aus Verfahrensschritt (1) erhaltenden Schälfurniere (e) unter Anbringung einer Klebeschicht (g), welche zwischen den mindestens zwei Schälfurnieren (e) aufgetragen wird, wobei die mindestens zwei Schälfurniere so zueinander angeordnet sind, dass sich die tangential zu den Jahresringen verlaufende Maserungsrichtung der beiden Schälfurniere (f₃) im Wesentlichen In die gleiche Richtung erstreckt und wobei die Laminierung unter Aufbringung eines Drucks von 20 bis 32 kg/cm2 erfolgt, indem die mindesntes zwei Schälfunriere nach Anbringung der Klebeschicht zusammen in Radialrichtung verpresst werden Dieser Verfahrensschritt ist beispielhaft in Figur 2 wiedergegeben.

Die mindestens zwei aus Verfahrensschritt (1) erhaltenen Schälfurniere (e) werden somit so aufeinander aufgebracht, dass die In Ihnen enthaltenen Jahresringe im Wesentlichen parallel zueinander angeordnet sind. Dies Ist insbesondere erforderlich, damit die resultierende Furnierholzmehrschicht die gleiche Standfestigkeit sowie auch die gleiche Optik wie ein Riftholz aufweist.

Bevorzugt werden die mindestens zwei Schälfurniere (e) so laminiert, dass jeweils die gleiche Seite des Schälfurniers, also die Innenseite beziehungsweise die Außenseite des Schälfurniers, zueinander zeigen. Beispielhaft bedeutet dies, dass die unterste/erste Schälfurnierschicht mit der Außenseite nach oben zeigt. Darauf wird eine Klebeschicht (g) aufgebracht und eine weiteres Schälfurnier (e) aufgebracht. Dieses weitere Schälfurnier (e) weist nun mit seiner Innenseite nach oben (also mit seiner Außenseiten zur untersten/ersten Schälfurnierschicht). Wird eine weitere Schälfurnierschicht aufgebracht, so wird zunächst eine weitere Klebeschicht (g) aufgebracht und das dritte Schälfurnier (e) so ausgerichtet, dass die Außenseite nach oben zeigt. Damit zeigt die Innenseite des dritten Schälfurniers zur Innenseite des mittleren Schälfurniers. Insgesamt weist also bevorzugt jede zweite Schälfurnierschicht mit der gleichen Seite nach oben. Dabei ist es unerheblich, ob die erste und/oder letzte Schicht mit der Innen- oder Außenseite nach oben zeigt.

Bevorzugt werden mindestens 5, besonders bevorzugt mindestens 10 und ganz besonders bevorzugt mindestens 15 der Schälfurniere (e) im Verfahrensschritt (2) laminiert. Zwischen die einzelnen Schälfurniere (e) werden Klebeschichten (g) aufgebracht. Diese Klebeschichten dienen insbesondere der festen Verbindung der mindestens zwei Schälfurniere (e). Bevorzugt werden jeweils mindestens 10, ganz besonders bevorzugt mindestens 15 der Schälfurniere (e) zunächst vorverpresst. Im Anschluss können mindestens zwei dieser vorverpressten Platten miteinander mit einer Klebeschicht (g) weiterverpresst werden. Es hat sich herausgestellt, dass durch dieses Verfahren der Anpressdurck im gesamten Volumen des Laminates verteilt und gleich gehalten wird. Dies ist insbesondere von Vorteil für die Qualität der resultierenden Furnierholzmehrschicht. Dadurch können Laminate mit mindestens 20, bevorzugt mit mindestens 30, ganz besonders bevorzugt mit mindestens 60 verpressten Schälfurnieren (e) hergestellt werden.

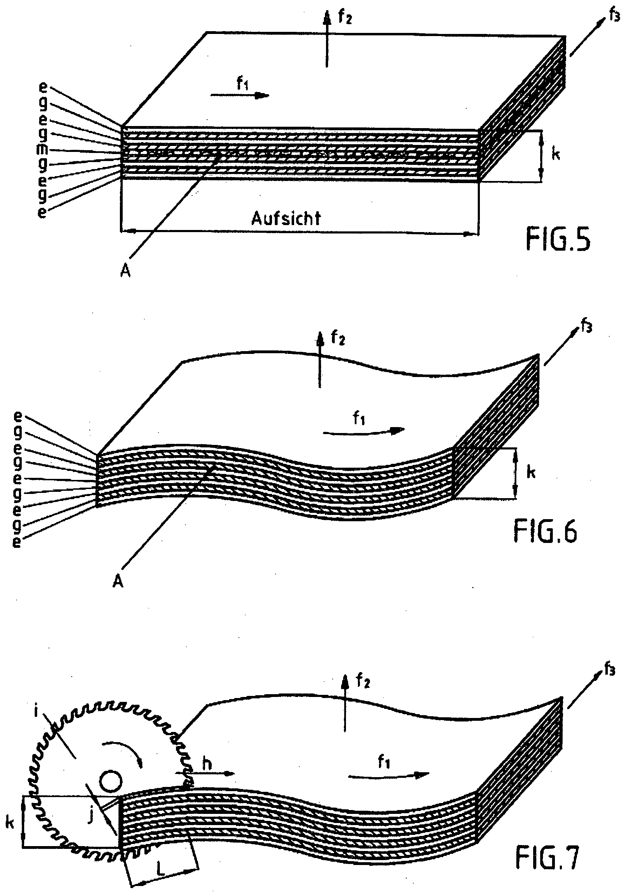

Es ist auch möglich, zusätzlich zu den Schälfurnierschichten (e) mindestens eine weitere Schicht (m) aus mindestens einem von den Holz-Schälfurnieren (e) unterschiedlichen Material, zwischen den Schälfurnierschichten (e) anzubringen. Darin wird diese mindestens eine weitere Schicht (m) vorzugsweise ebenfalls durch Aufbringen einer Klebeschicht (g) und Verpressen mit den übrigen Schichten, die die Furnierholzmehrschicht bilden, mit den Schälfurnieren (e) fest verbunden. Entsprechend ist eine solche weitere Schicht (m) bevorzugt ein Material in fester Form, es ist jedoch auch möglich flüssige, halbfeste, gelartige, pastöse oder pulverförmige Schichten (m) z.B. durch Aufsprühen, Aufstreichen, Tauchen oder Rakeln aufzubringen. Eine beispielhafte Ausführungsform, die zusätzlich 1 weitere Schicht (m) enthält, ist in Figur 5 dargestellt.

Bevorzugt sind solche weiteren Schichten (m) ausgewählt aus einem elektrisch leitfähigen Material, es handelt sich also bevorzugt um eine oder mehrere Metallplatten, -bleche oder -folien bzw. -schichten. Bevorzugt sind Metallschichten ausgewählt aus Metallen oder Legierungen wie insbesondere aus Silber, Kupfer, Gold, Aluminium, Wolfram, Messing, Eisen, Chrom, Blei, Titan, Edelstahl oder auch aus Graphit. Bevorzugt sind Schichten oder Bleche aus Kupfer, Aluminium, Silber, Gold und Graphit. Besonders bevorzugt ist Kupfer.

Furniermehrholzschichten mit solchen elektrisch leitfähigen Schichten sind insbesondere geeignet zur Herstellung von Beleuchtungselementen, die mit Niederspannung arbeiten. Es ist dadurch beispielsweise möglich, ein Furnierholzmehrschlcht-Beleuchtungselement herzustellen, welches vollständig oder nahezu ohne Leitungskabel auskommt.

Auch können hier Materialien für die mindestens eine weitere Schicht (m) verwendet werden, die ausschließlich aufgrund ihrer optischen Eindrücke ausgewählt werden, wie beispielsweise farbige und/oder transparente Kunststoffe oder Harze.

Solche weiteren Schichten (m) können im Prinzip die gleiche Dicke wie die Schälfurniere (e) aufweisen, also eine Dicke bis 2,5 mm besitzen. Bevorzugt ist jedoch eine Dicke von bis zu 2,0 mm, bevorzugter bis zu 1,0 mm, noch bevorzugter bis zu 0,5 mm, am meisten bevorzugt bis zu 0,2 mm.

Bevorzugt weist eine solche weitere Schicht (m) eine Dicke von 0,05 bis 2,5 mm, bevorzugter 0,1 bis 1,5 mm, besonders bevorzugt 0,2 bis 0,7 mm auf.

Eine besonders bevorzugte Ausführungsform betrifft eine erfindungsgemäße Furnierholzmehrschicht, die mindestens eine weitere Schicht (m) aus einem elektrisch leitfähigen Material, bevorzugt einem Metall, mit einer Dicke von bis zu 0,5 mm, bevorzugt bis zu 0,4 mm, bevorzugter bis zu 0,2 mm aufweist. Darin ist es insbesondere bevorzugt, eine einzige oder zwei solcher elektrisch leitfähigen weiteren Schichten (m) vorzusehen.

Furnierholzmehrschichten, die zur Herstellung dreidimensional geformter Ausführungsformen, wie nachfolgend beschrieben, vorgesehen sind können eine oder bevorzugt mindestens zwei und mehr solcher weiteren Schichten (m) aufweisen.

Liegt mehr als eine weitere Schicht (m) in einer der erfindungsgemäßen Furnierholzmehrschichten vor, so können diese grundsätzlich aus dem gleichen oder aus unterschiedlichen Materialien mit unterschiedlichen Funktionen ausgewählt werden.

Auch in einer solchen Ausführungsform können die Schälfurniere aus einer oder mehreren unterschiedlichen Holzarten ausgewählt sein, also neben sibirischer Lärche mindestens eine weitere Holzart umfassen, wie vorstehend ausgeführt. Auch hier ist es jedoch bevorzugt, dass alle Holz-Schälfurnierschichten (e) aus sibirischer Lärche bestehen.

Klebstoffe für die Herstellung von Holzfurnieren sind bekannt. Dabei sollte der Klebstoff für die Klebeschicht (g) insbesondere eine geringe Schrumpfung aufweisen. Die ausgehärtete Klebeschicht (g) sollte insbesondere die gleichen mechanischen Eigenschaften aufweisen wie das Schälfurnier (e). Vorzugsweise sollte die thermische Ausdehnung und/oder das Quellverhalten des Klebstoffes vergleichbar sein zu der thermischen Ausdehnung des Schälfurniers in tangentialer Richtung. Dies führt insbesondere dazu, dass die Standhaftigkeit der resultierenden Furnierholzmehrschicht verbessert wird. Bei Nässe und/oder Temperatur können unterschiedliche Eigenschaften der Klebeschicht (g) und des Schälfurniers (e) zu Spannungen innerhalb der Furnierholzmehrschicht führen, welches die Standhaftigkeit reduziert, Insbesondere bevorzugt ist daher die Verwendung eines Phenol-Resorcin-Formaldehyds. Dieser ist wasserbeständig und auch kostengünstig. Ganz besonders bevorzugt wird der Klebstoff der Klebeschicht (g) ausgewählt aus der Gruppe bestehend aus Phenol-Resorcin-Formaldehyd, Epoxidharz, Melamin-Harnstoff-Formaldehyd und Melamin-Harnstoffharzleim. Solche Klebstoffe sind kommerziell erhältlich beispielsweise unter den Namen Kauresin Leim 460 (BASF), Dynosol Leim S-199 (Dyno Industries), Kauramin Leim 681 (BASF) oder Dynomel Leim 2-435 (Dyno Industries). Der Klebstoff sollte außerdem mit den ggf. vorhandenen weiteren Schichten (m) verträglich sein.

Bevorzugt weist die Klebeschicht (g) eine Dicke von 10 bis 150 *µ*m auf. Dabei kann die Dicke einer Klebeschicht (g) variieren. Dies resultiert Insbesondere daraus, dass sich der Klebstoff bei der Verpressung weiter und durch geringe Unebenheiten der Schälfurniere (e) unterschiedlich stark verteilt.

In einer Ausführungsform wird dem Klebstoff der Klebeschicht (g) zusätzlich mindestens ein Farbstoff beigemischt. Dadurch kann das ästhetische Erscheinungsbild der resultierenden Furnierholzmehrschicht verändert werden. Durch Verwendung verschiedener Farbstoffe in den Klebeschichten, kann ein die Farbe des Holzes emittierender Effekt erzielt werden.Falls mindestens zwei Klebeschichten (g) im Verfahrensschritt (2) Anwendung finden (mindestens drei Schälfurniere (e) werden laminiert), so können diese mindestens zwei Klebeschichten die gleiche oder unterschiedliche Farben aufweisen.

Die Laminierung Im Verfahrensschritt (2) kann durch Kaltverpressen, Heißverpressen oder einer sequentiellen Kombination beider Verfahren erfolgen. Bevorzugt erfolgt die Laminierung durch Kaltverpressen. Dies erfordert insbesondere einen geringen Energieaufwand und macht daher das Verfahren effizienter.

Des Weiteren erfolgt die Laminierung unter Aufbringung von Druck, indem die mindestens zwei Schälfurniere (e) nach Anbringung der Klebeschicht (g) zusammen in Radialrichtung (f₂), entsprechend der Richtung senkrecht zu der durch f₁ und f₃ aufgezogenen Fläche, verpresst werden. Dazu wird ein Druck von 20 bis 32 kg/cm² angewendet. Bevorzugt wird dazu ein Druck von 20 bis 30 kg/cm², noch bevorzugter von 22 bis 30 kg/cm², besonders bevorzugt von 25 bis 30 kg/cm² und ganz besonders bevorzugt von 27 bis 30 kg/cm² verwendet. Ein weiterer besonders bevorzugter Druckbereich liegt zwischen 25 und 27 kg/cm³. Der Zeltraum der Verpressung unter Druck hängt von der verwendeten Klebstoffart ab. Sie erfolgt bevorzugt über einen Zeitraum von 30 min bis 2 h bei Helßverpressung. Hierbei werden bevorzugt Temperaturen von 100 bis 120 °C verwendet. Bei der Kaltverpressung erfolgt sie bevorzugt über einen Zeitraum von bis zu 3 Tagen, besonders bevorzugt über einen Zeitraum von 1 bis 2 Tagen. Der Zeitraum des Verpressens Ist dabei Insbesondere von der Art des verwendeten Klebstoffes und/oder der Art des Verpressens (Kaltverpressen oder Heißverpressen) abhängig, die wiederum von der Art der verpressten Schichten (e) und ggf. (m) abhängig ist.

Dabei wird In der Regel ein über die gesamte Fläche in Radialrichtung (Richtung f₂ der Figuren), entsprechend der Richtung senkrecht zu der Fläche, die von den Richtungen f₁ und f₃ in den Figuren aufgezogen wird, gleichmäßiger Druck ausgeübt und eine planparallele Furnierholzmehrschicht erhalten (wie beispielhaft in Figur 3 dargestellt). Es Ist jedoch auch möglich, über die Fläche in Richtung f₂ unterschiedlich starke Drücke oder einen Druckgradienten auszuüben oder den Druck mittels spezieller dreidimensional geformter Druckwerkzeuge In Form einer sogenannten Negativ-Form in eine gewünschte Form (3D-Form) zu verpressen. Eine so erhältliche geformte Furnierholzmehrschicht ist beispielhaft In Figur 6 und 7 dargestellt. Dadurch können aus der erfindungsgemäßen Furniermehrholzschlcht Formteile oder Möbelstücke etc. in diversen Formen erhalten werden. Bel der Verwendung der Furnierholzmehrschicht ist es damit erstmals möglich, eine Parkettoberfläche beispielsweise mit einer optischen Wellenstruktur zu erhalten.

Wie sich aus den oben gezeigten Tabellen 1 und 2 ergibt, hängt die Festigkeitsgrenze des verwendeten Holzes stark vom prozentualen Verhältnis zwischen Früh- und Spätholzanteilen ab, die - wie aus Tabelle 1 ersichtlich - verschiedene Dichten aufweisen. Der Verfahrensschritt der Verpressung, Insbesondere unter Anwendung von Druck ist somit wichtig, um in der resultierenden Furnierholzmehrschicht einen Ausgleich der durch Früh- und Spätholzanteile bedingten Dichtedifferenz (zumindest teilweise) zu erzielen. Dies führt zu einer Steigerung der Raumdichte des Frühholzanteiles und folglich zu einer Volumenverminderung bei relativ unverändertem Spätholzanteilvolumen. Durch Pressen unter Anwendung eines Maximaldruckes von bis zu ca. 44 kg/cm² quer zur Faserrichtung der Lärche und von bis zu ca. 34 kg/cm² quer zur Faserrichtung der Kiefer ist eine Volumenreduzierung / Verdichtung ohne Verletzung (Einphasenpressen) der Jahresringe um etwa bis zu einem Viertel möglich. Auf diese Weise wird durch das Verpressen der Spätholzvolumenanteil in der Furnierholzmehrschicht und damit auch die durchschnittliche Festigkeitsgrenze des Holzes erhöht.

### Verfahrensschritt (3)

Im Verfahrensschritt (3) wird die erfindungsgemäße Furnierholzmehrschicht fertiggestellt. Dazu wird das durch den Verfahrensschritt (2) erhaltenen Laminat im Wesentlichen senkrecht zu der In Verfahrensschritt (2) aufgetragenen Klebeschicht (g) und der tangential zu den Jahresringen verlaufenden Maserungsrichtung der Schälfurniere (f₃) zerschnitten. Die Schnittrichtung (h) ist beispielhaft in Figur 3 dargestellt.

Bevorzugt wird das Laminat mit einer Kreissäge, Bandsäge oder Durchlaufsäge zerschnitten. Hierbei ist es insbesondere wünschenswert, dass möglichst wenig Holz durch die Bildung von Sägespänen verloren geht. Die Schnittfuge ist hierfür bevorzugt maximal ca. 1,5 mm, bevorzugter ca. 1,1 mm.

Die hergestellten Furnierholzmehrschichten weisen bevorzugt eine Dicke (j) von ≥ 1 mm, bevorzugt von 1,0 bis 3, 0 mm, insbesondere von 1,0 bis 2,5 mm, besonders bevorzugt von 1,2 bis 2,3 mm und ganz besonders bevorzugt von 1,4 bis 2,1 mm auf. Derartige Dicken (j) sind Insbesondere bevorzugt bei Furnierholzmehrschichten, die für die Herstellung von Platten und Möbeln vorgesehen sind. Bei einer Verwendung für die Herstellung beispielsweise von Fensterkanteln und Massivmöbeln können die erfindungsgemäßen Furnierholzmehrschichten Dicken (j) bis zu 10 mm und sogar bis zu 80 mm aufweisen. Dabei umfasst eine Schälfurnierschicht bevorzugt mindestens einen, besonders bevorzugt zwei, ganz besonders bevorzugt mindestens 3 tangential in Richtung (f₃) verlaufende Jahresringe.

Durch das Zersägen, insbesondere Formatkreissägen des aus Verfahrensschritt (2) erhaltenen Laminates wird eine Furnierholzmehrschicht der Breite (k), der Dicke (j) und der Länge (L) erhalten. Dabei kann die Breite (k) Im Wesentlichen durch die Anzahl und Dicke der verpressten Schälfurniere (e) und ggf. der weiteren Schichten (m) bestimmt werden. Ebenfalls hat die Dicke der Klebeschicht (g) einen Einfluss auf die Breite (k) der Furnierholzmehrschicht. Ebenso kann die Länge (L) durch die Länge des in Verfahrensschrittes (2) hergestellten Laminates bestimmt werden.

Die Paramater der erfindungsgemäßen Furnierholzmehrschicht (k), (j) und (L) sind somit sehr flexibel gestaltbar.

Auf diese Weise kann eine Furnierholzmehrschicht erhalten werden, welche eine Dichte von mindestens 5 im Wesentlichen stehenden Jahresringen aufweist. Diese weist die oben genannten Eigenschaften auf.

Dabei ist insbesondere wichtig, dass die Festigkeitseigenschaften der resultierenden erfindungsgemäßen Furnierholzmehrschicht maßgeblich durch die Festigkeltsgrenze in Tangentialrichtung (f₃ in den Figuren) bestimmt werden. Wie sich aus der vorstehenden Tabelle 2 ergibt, beträgt diese für Holz der sibirischen Lärche ca. 63 kg/cm². Außerdem weisen die im Verfahrensschritt (2) verpressten Schälfurniere quer der Faser eine erhöhte Dichte auf, je nach aufgewendetem Druck kann eine Dichteerhöhung um bis zu 20% erreicht werden. Dadurch kann mit dem erfindungsgemäßen Verfahren eine Fumierholzmehrschicht erhalten werden, die eine Festigkeitsgrenze in Tangentialrichtung (f₃) von bis zu 75 kg/cm² aufweist, was einer vergleichbaren Festigkeit in Radialrichtung von Eiche entspricht (siehe Tabelle 2). In einem optionalen Schritt, welcher sich an den Verfahrensschritt (3) anschließt, kann die erfindungsgemäße Furnierschicht einer weiteren optischen Gestaltung unterworfen werden. Dabei kann beispielsweise mindestens ein Querschnitt eines Asts und/oder ein anderes Element, welche die gleiche Dicke aufweisen wie die erfindungsgemäße Furnierholzmehrschicht, in mindestens einen zuvor passgenau ausgeschnittenen Bereich der Furnierholzmehrschicht eingebracht werden. Dies verleiht der erfindungsgemäßen Furnierholzmehrschicht ein natürliches Aussehen. Bevorzugt wird dazu der Klebstoff verwendet, welcher zur Herstellung der Klebeschicht (g) dient.

Unter anderen Elementen werden bevorzugt Holzelemente verstanden. Besonders bevorzugt handelt es sich beispielsweise um ein Teilstück der erfindungsgemäßen Furnierholzmehrschicht, welches bevorzugt eine Form aufweist, die ausgewählt wird aus der Gruppe, bestehend aus einem Kreis, einem Rechteck, einem Stern, einer Raute, einer Ellipse, einem Dreieck, einem Fünfeck, einem Sechseck, einem Vieleck mit mindestens sieben Ecken, einer Blume und einem Parallelogramm. Besonders bevorzugt wird dieses Element mit Ihrem Verlauf der Jahresringe versetzt zu den Jahresringen der erfindungsgemäßen Furnierholzmehrschicht eingearbeitet. Auch hierdurch kann die erfindungsgemäße Furnierholzmehrschicht optisch gestaltet werden.

In einer Ausführungsform können auch mehrere Astquerschnitte und/oder andere Elemente in die erfindungsgemäße Furnierholzmehrschicht eingebracht werden. Dadurch können Individuelle Muster dargestellt werden. Beispielsweise ist es so auch möglich, Schriftzüge, Logos und Bilder in die erfindungsgemäße Furnierholzmehrschicht einzuarbeiten.

Aufgrund der besonders hohen Festigkeit der erfindungsgemäßen Furnierholzmehrschichten können diese im Verfahrensschritt (3) auch in deutlich dickere Blöcke geschnitten werden und anschließend durch übliche Holzbearbeitungsmaßnahmen wie Drechseln, Zusägen und/oder Schleifen in diverse dreidimensionale Formen gebracht werden. Dabei entsteht infolge des optischen Kontrasts zwischen Früh- und Spätholzanteilen des verwendeten Holzes eine optisch sehr ansprechende Oberflächenmaserung. Beispielsweise zeigen gedrechselte Furnierholzmehrschicht-Bauteile aufgrund der Drehung der Furnierholzmehrschicht bei der Bearbeitung aus geometrischen Gründen eine optische krels- oder ellipsenförmige Maserungsstruktur. Solche Furnierholzmehrschicht-Bauteile aus der erfindungsgemäßen Furnierholzmehrschicht sind besonders für Arbeiten im Bereich Holz-Architektur und Design oder als besondere optische Gestaltungselemente in Treppen bzw. Geländern oder Möbeln oder als sonstige Dekorationsgegenstände anwendbar.

### Verfahrensschritt (4)

Optional kann die durch die erfindungsgemäßen Verfahrensschritte (1) bis (3) erhaltene erfindungsgemäße Furnierholzmehrschicht In einem weiteren Verfahrensschritt (4) nach Verfahrensschritt (3), ggf. nach der Einbringungen von mindestens einem Astquerschnitt und/oder anderem Element, auf einen Träger aufgebracht werden. Dadurch entsteht die erfindungsgemäße Furnierholzplatte.

Dabei werden bevorzugt mehrere Furniere zunächst sortiert. Die Sortierung erfolgt dabei bevorzugt manuell. Vorzugsweise wird bei der Sortierung auf optische Aspekte geachtet. So könnten auf der resultierenden Furnierholzplatte mehrere erfindungsgemäße Furnierholzmehrschichten nebeneinander aufgebracht werden. Bevorzugt werden die nebeneinander aufgebrachten Furnierholzmehrschichten über Ihre Kanten durch Kaltverpressung unter Anwendung von Drücken von 1 bis 10 kg/cm², besonders bevorzugt von 4 bis 8 kg/cm², ganz besonders bevorzugt von 5 bis 6 kg/cm², je nach verwendetem Klebstoff u.a. Verhältnissen der einzelnen Furnierholzmehrschichten (z.B. Festigkeit, Farbe, Dichte der Jahresringe) zusammengeklebt.

Hier wird somit insbesondere darauf geachtet, dass die Kanten der aneinander treffenden einzelnen Furnierholzmehrschichten nicht sichtbar sind und die Furnierholzplatte später ein ansprechendes Gesamtbild hat. Insgesamt erfolgt die Sortierung bevorzugt unter Aspekten der Farbe, der Oberflächenbeschaffenheit, der Geometrie und der Ästhetik.

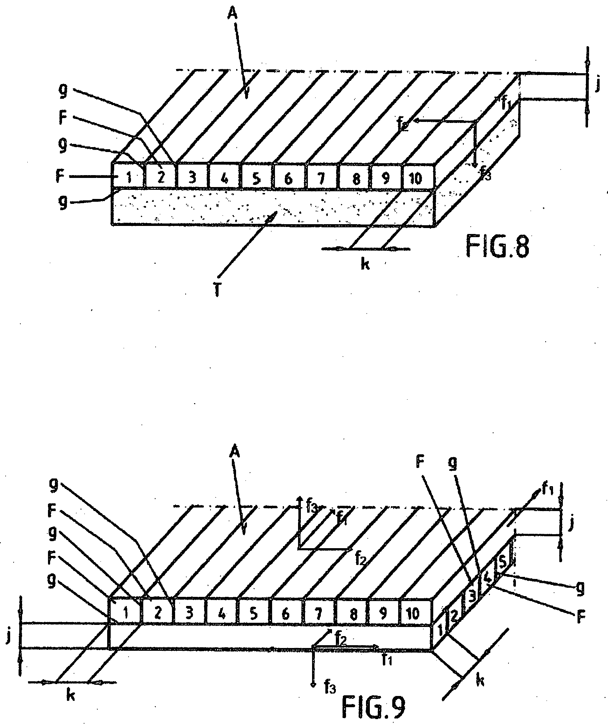

Die Aufbringung der erfindungsgemäßen Furnierholzmehrschichten kann auf einer Seite des Trägers und/oder auf mehr als einer Seite des Trägers vorgenommen werden. Dies richtet sich nach der späteren Verwendung der Furnierholzplatte. So ist das Aufbringen mindestens einer der erfindungsgemäßen Furnierholzmehrschichten auf einer Seite eines Trägers für beispielsweise Wand-, Decken- oder Bödenauskleidungen ausreichend. Im Gegensatz dazu kann für die Herstellung von Möbeln das Aufbringen von mindestens einer der erfindungsgemäßen Furnierholzmehrschichten auf mindestens zwei, bevorzugt alle vier Seiten des Trägers zweckdienlich sein. Eine erfindungsgemäße Furnierholzplatte mit einem Träger ist beispielhaft in Figur 8 dargestellt.

Bevorzugt wird unter Aufbringung jedes Verfahren verstanden, welches geeignet ist, die Furnierholzmehrschicht mit dem Träger zu verbinden. Besonders bevorzugt wird hierzu eine Klebeschicht (g), wie bereits in Verfahrensschritt (2) näher beschrieben, verwendet. Es ist jedoch auch möglich, günstigere Klebstoffe, wie beispielsweise PVA, Melamin-Harnstoffharzleim oder andere in der Möbelindustrie gängige Klebstoffe zu verwenden. Bevorzugt erfolgt die Aufbringung unter Druck. Dazu wird bevorzugt ein Druck von 1 bis 10 kg/cm², besonders bevorzugt von 4 bis 8 kg/cm², ganz besonders bevorzugt von 5 bis 6 kg/cm² verwendet. Auch hier kann die Verpressung bevorzugt durch Kaltverpressen, Heißverpressen oder einer sequentiellen Kombination beider Verfahren erfolgen. Bevorzugt erfolgt das Verpressen über einen Zeitraum von 3 min bis zu 15 h, ganz besonders bevorzugt von 1 h bis 6 h. Der Zeitraum des Verpressens ist dabei insbesondere von der Art des verwendeten Klebstoffes und/oder der Art des Verpressens (Kaltverpressen oder Heißverpressen) abhängig.

Nach der Verpressung kann eine Entformung zur Entpressung über einen Zeitraum von 1 bis 15 h, bevorzugt 3 bis 12 h, ganz besonders bevorzugt 6 bis 8 h erfolgen.

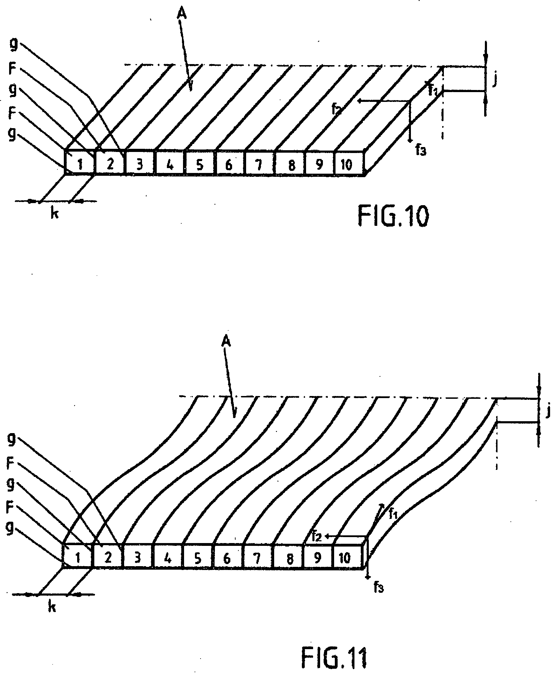

Es ist jedoch auch möglich, mehrere der erhaltenen Furnierholzmehrschichten zu Furnierholzplatten verschiedener Abmaße ohne Aufbringen auf ein zusätzliches Trägermaterial zusammenzufügen. Dabei können beispielsweise Furnierholzplatten (ohne Trägermaterial) in einem Format von bis zu 3000 mm hergestellt werden. Bevorzugt werden Platten in einem Format 1220 mm x 2400 mm hergestellt. Hierfür werden In gleicher Welse wie oben dargestellt mindestens zwei der erfindungsgemäßen Furnierholzmehrschichten nebeneinander angeordnet und über ihre Kanten unter Verpressen, wie hierin dargestellt, miteinander verklebt. Eine solche Furnierholzplatte ohne Träger ist beispielhaft in Figur 10 und 11 dargestellt.

In einer weiteren bevorzugten Ausführungsform einer Furnierholzplatte werden mindestens zwei der vorstehend beschriebenen Furnierholzplatten ohne Träger übereinander angeordnet und über ihre Fläche miteinander verklebt. Dazu wird auf der Oberfläche (A in den Figuren) oder auf der der Oberfläche (A) gegenüberliegenden Fläche ein Klebstoff (wie in Verfahrensschritt 2) aufgebracht und die beiden Furnierholzplatten (ohne Träger) anschließend durch Verpressung von 1 bis 10 kg/cm², besonders bevorzugt von 4 bis 8 kg/cm², ganz besonders bevorzugt von 5 bis 6 kg/cm² je nach Verhältnissen der einzelnen Furnierholzmehrschichten (z.B. Dichte der Jahresringe) zusammengeklebt. Dabei erfolgt bevorzugt die Anordnung der einzelnen Furnierholzplatten (ohne Träger) derart, dass jeweils zwei aufeinanderliegende Furnierholzplatten um 90° gegeneinander versetzt angeordnet werden. In Ausführungsformen, in denen mehr als zwei solcher Furnierholzplatten (ohne Träger) übereinander angeordnet werden, ist somit jede zweite Furnierholzplatte gegenüber der darüber liegenden Platte) um 90° versetzt angeordnet. Eine solche erfindungsgemäße Furnierholzplatte Ist beispielhaft in Figur 9 dargestellt.

Grundsätzlich ist es möglich, die vorstehend beschriebenen Furnierholzplatten mit oder ohne Träger mit allen erfindungsgemäß erhältlichen Furnierholzmehrschichten herzustellen, insbesondere auch mit den vorstehend beschriebenen 3-dimensional verpressten Furnierholzmehrschichten mit optischer Wellenstruktur, wie beispielhaft (ohne Träger) in Figur 11 dargestellt.

Im Weiteren Anschluss kann die Furnierholzplatte (sowohl mit als auch ohne Träger) weiteren optionalen Verarbeitungsschritten unterworfen werden, welche ausgewählt werden, aus der Gruppe, bestehend aus Hobeln, Schleifen, Imprägnieren und Lackieren.

### Furnierholzplatte

Ebenso ist Gegenstand der vorliegenden Erfindung eine Furnierholzplatte, umfassend einen Träger und mindestens eine erfindungsgemäße Furnierholzmehrschicht, aber auch eine Furnierholzplatte bestehend aus einer oder mehreren der erfindungsgemäßen Furnierholzmehrschichten, also eine Furnierholzplatte, die aus einer oder mehreren zu einer Furnierholzplatte zusammengefügten erfindungsgemäßen Furnierholzmehrschichten (ohne Träger) besteht. Bevorzugt ist der Träger aus Holz und/oder Holzwerkstoffen gefertigt. Bevorzugt wird der Träger ausgewählt aus der Gruppe, bestehend aus Sperrholz, Spanplatten und Holzfaserplatten. Besonders bevorzugt handelt es sich dabei um eine mitteldichte Faserplatte. Die Dimensionen dieses Trägers sind flexibel. Je nach Verwendungszweck können diese angepasst werden. Ebenso kann, wie oben beschrieben, die erfindungsgemäße Furnierholzmehrschicht den Dimensionen des Trägers angepasst werden. Wie bereits in Bezug auf Verfahrensschritt (4) beschrieben, kann dabei mindestens eine erfindungsgemäße Furnierholzmehrschicht auf mindestens eine Seite des Trägers aufgebracht werden. Je nach Verwendungszweck der Furnierholzplatte kann die mindestens eine erfindungsgemäße Furnierholzmehrschicht auch auf mindestens zwei Seiten des Trägers aufgebracht werden.

Bevorzugt werden die Oberflächeneigenschaften der erfindungsgemäßen Furnierholzplatten durch die Furnierholzmehrschicht bestimmt. Dabei dient der Träger (sofern vorhanden) nur der Stabilität sowie einer Werkstoffersparnis. Insbesondere schirmt die erfindungsgemäße Furnierholzmehrschicht den Träger vor Nässe, Sonne und mechanischer Belastung ab, so dass an den Träger keine diesbezüglichen speziellen Anforderungen gestellt werden müssen.

Dies ermöglicht es, dass Furnierholzplatten bereitgestellt werden zur Herstellung von Möbeln oder Fußbodenbelägen. Dies ermöglicht es außerdem, dass Furnierholzplatten bereitgestellt werden zur Herstellung von Möbeln, Türen, Fußbodenbelägen (insbesondere Parkett), Außenverkleidungen, sowie Beleuchtungselementen oder zur Innenausstattung von Räumen (Interieur). Bevorzugt betrifft die vorliegende Erfindung damit auch die Verwendung der erfindungsgemäßen Furnierholzplatte zur Herstellung von Möbeln oder Fußbodenbelägen, Parkett, Außenverkleidungen, sowie Beleuchtungselementen. Besonders bevorzugt betrifft die vorliegende Erfindung damit auch die Verwendung der erfindungsgemäßen Furnierholzplatte zur Herstellung von Möbeln, Türen, Fußbodenbelägen (insbesondere Parkett), Außenverkleidungen, Beleuchtungselementen oder zur Innenausstattung von Räumen (Interieur). Dabei werden unter dem Begriff Möbeln insbesondere Möbel zur Verwendung im Innen- und/oder im Außenraum oder Designmöbel verstanden. Besonders bevorzugt werden diese Möbel ausgewählt aus der Gruppe, bestehend aus einem Tisch, einem Stuhl, einer Bank, einem Schrank, einem Sideboard, einer Küchenarbeitsplatte, einem Regal, Badmöbeln, Türen und Fassadenplatten sowie Fensterbänken und Fensterkanteln.

Gleichzeitig können die erfindungsgemäßen Furnierholzplatten (mit oder ohne Träger) auf Grund ihrer mechanischen Eigenschaften auch im Außenbereich eingesetzt werden. Dabei können sie bevorzugt als Ersatz von Rifthölzern verwendet werden. Damit stellen die erfindungsgemäßen Furnierholzplatten (mit oder ohne Träger) eine kostengünstigere Alternative zu den bekannten Rifthölzern dar.

Ebenso ist es möglich, die Lichtdurchlässigkeit der erfindungsgemäßen Furnierholzmehrschichtplatte für dekorative Gestaltungen zu nutzen. Somit können insbesondere Wand- und/oder Deckenpaneele aus der erfindungsgemäßen Furnierholzmehrschicht hergestellt werden, welche gezielt durch die Anbringung von Lichtquellen, beispielsweise LEDs (Light Emitting Diods), hinter diesen Paneelen optisch gestaltet werden können. Durch die Anpassung des Musters der erfindungsgemäßen Furnierholzmehrschicht und die gezielte Verwendung von Lichtquellen ist somit eine dekorative Ausgestaltung von Räumen und/oder Außenbereichen möglich. Ebenso Ist es auch möglich, durch das Anschleifen der erfindungsgemäßen Furnierholzmehrschicht und eine resultierende Variation der Dicke der Schicht optische Gestaltungen wie Muster einzuarbeiten. Für derartige Verwendungsmöglichkeiten sind Insbesondere auch solche erfindungsgemäßen Furnierholzmehrschichten geeignet, die mindestens eine weitere Schicht (m), Insbesondere aus einem elektrisch leitfähigen Material, aufweisen, wie vorstehend ausgeführt.

Es Ist insbesondere ein Vorteil, dass die erfindungsgemäße Furnierholzmehrschicht sehr dünn herstellbar ist, wodurch die Lichtdurchlässigkeit beeinflusst werden kann. So können sie beispielsweise 0, 8 bis 1 mm dick sein. Bei gängigen Tangentialbrettern ist auf Grund der mechanischen Eigenschaften meist nur eine Dicke von 4 bis 6 mm zu realisieren. Die mechanischen Eigenschaften der erfindungsgemäßen Furnierholzmehrschicht erlauben jedoch die Herstellung von Dicken in der oben genannten Größenordnung.

### Verfahren

Ein weiterer Aspekt der vorliegenden Erfindung betrifft ein Verfahren zur Herstellung einer Furnierholzmehrschicht, umfassend Holz der sibirischen Lärche, mit einer Dichte von mindestens 5 stehenden Jahresringen pro 1 cm Brelte (k) der Furnierholzmehrschicht, wobei die Breite (k) der Furnierholzmehrschicht als die Ausdehnung der Furnierholzmehrschicht senkrecht zur Klebstoffschicht definiert ist, umfassend die folgenden Schritte:
(1) Herstellen von mindestens zwei Schälfurnieren (e);
(2) Laminieren der mindestens zwei aus Verfahrensschritt (1) erhaltenen Schälfurniere (e) unter Anbringung einer Klebeschicht (g), welche zwischen den mindestens zwei Schälfurnieren (e) aufgetragen wird, wobei die mindestens zwei Schälfurniere so zueinander angeordnet sind, dass sich die tangential zu den Jahresringen verlaufende Maserungsrichtung der beiden Schälfurniere (f₃) im Wesentlichen in die gleiche Richtung erstreckt und wobei die Laminierung unter Aufbringung eines Drucks von 20 bis 32 kg/cm2 erfolgt, indem die mindesntes zwei Schälfunriere nach Anbringung der Klebeschicht zusammen in Radialrichtung verpresst werden; und
(3) Schneiden des durch den Verfahrensschritt (2) erhaltenen Laminates im Wesentlichen senkrecht zu der In Verfahrensschritt (2) aufgetragenen Klebeschicht (g) und der tangential zu den Jahresringen verlaufenden Maserungsrichtung der Schälfurniere (f₃), um die Furnierholzmehrschicht zu erhalten.

Bevorzugt erfolgt das Laminieren in Verfahrensschritt (2) dadurch, dass die mindestens zwei Schälfurniere nach Anbringung der Klebeschicht (g) zusammen in Radialrichtung (f₂), entsprechend der Richtung senkrecht zur Fläche die von den Richtungen f₁ und f₃ in den Figuren aufgezogen wird, verpresst werden. Dabei werden bevorzugt die vorstehend bereits definierten Pressverfahren und Druckbereiche angewendet. Ganz besonders bevorzugt wird ein Druck von mindestens 10 kg/cm², noch bevorzugter von mindestens 12 kg/cm², ganz besonders bevorzugt von mindestens 15 kg/cm² angewendet.

Dabei erfolgt die Laminierung bevorzugt unter Aufbringung von Druck senkrecht zur tangentialen Richtung (Richtung f₂ in den Figuren) so, dass die Schälfurniere fest zusammengeklebt werden und die durchschnittlichen Festigkeitseigenschaften der erfindungsgemäßen Furnierholzmehrschicht durch Volumenverminderung und Dichtezunahme des Frühholzanteiles gesteigert werden, wie vorstehend bereits Im Detail ausgeführt.

Die einzelnen Verfahrensschritte (1) bis (3), wie oben erläutert, sind dabei Teil des erfindungsgemäßen Verfahrens. Dabei Ist das Verfahren bevorzugt dadurch gekennzeichnet, dass die Furnierholzmehrschicht aus sibirischer Lärche besteht, bzw. dass alle Furnierholzschichten (e) aus sibirischer Lärche bestehen.

Eine weitere Ausführungsform betrifft das erfindungsgemäße Verfahren wie hier definiert, zur Herstellung einer Furnierholzmehrschicht, umfassend Holz der sibirischen Lärche, mit einer Dichte von mindestens 3 stehenden Jahresringen pro 1 cm Breite (k) der Furnierholzmehrschicht vor dem Verpressen.

Außerdem ist Gegenstand der Erfindung das vorstehen beschriebene Verfahren, worin in Schritt (2) mindestens eine weitere Schicht (m) aus einem von den Schälfurnieren (e) unterschiedlichen Material mit den Schälfurnieren (e) unter Anbringung einer Klebeschicht (g) fest verbunden wird, wie vorstehend bereits ausführlich erläutert.

Insbesondere ist in einem solchen Verfahren bevorzugt, daß die mindestens eine weitere Schicht (m) aus einem elektrisch leitfähigen Material ausgewählt ist, welche weiterhin bevorzugt eine Dicke wie vorstehend definiert aufweisen können, bevorzugt ist hier ebenfalls eine Dicke von bis zu 0,4 mm, bevorzugter bis zu 0,2 mm.

Ebenso kann das erfindungsgemäße Verfahren zusätzlich einen weiteren Verfahrensschritt (4) umfassen, welcher das
(4) Aufbringen mindestens einer nach Verfahrensschritt (3) erhaltenen Furnierholzmehrschicht auf einen Träger,
umfasst,
oder worin mindestens zwei der erhaltenen Furnierholzmehrschichten zu Furnierholzplatten unterschiedlicher Abmessungen (ohne Aufbringen auf ein zusätzliches Trägermaterial) wie vorstehend beschrieben zusammengefügt werden, indem mindestens zwei der erfindungsgemäßen Furnierholzmehrschichten nebeneinander angeordnet werden und über ihre Kanten unter Verpressen, wie vorstehend beschrieben, miteinander verklebt werden, oder
worin mindestens zwei derartige Furnierholzplatten (ohne Träger) in einem weiteren Verfahrensschritt übereinander angeordnet und über Ihre Fläche miteinander verklebt werden, wobei auf der Oberfläche (A in den Figuren) oder auf der der Oberfläche (A) gegenüberliegenden Fläche ein Klebstoff (wie In Verfahrensschritt 2) aufgebracht und die beiden Furnierholzplatten (ohne Träger) anschließend durch Verpressung, wie vorstehend beschrieben, zusammengeklebt werden, wobei die Anordnung der einzelnen Furnierholzplatten (ohne Träger) derart erfolgt, dass jeweils zwei aufelnanderliegende Furnierholzplatten um 90° gegeneinander versetzt angeordnet werden.

Auch der Verfahrensschritt (4) wurde oben bereits näher erläutert. Bevorzugt ist der Träger aus Holz und/oder Holzwerkstoffen gefertigt. Besonders bevorzugt wird der Träger dabei ausgewählt aus der Gruppe, bestehend aus Sperrholz, Spanplatten und Holzfaserplatten. Dabei wird die vorstehend beschriebene erfindungsgemäße Furnierholzplatte mit Träger oder ohne Träger erhalten.

### Beschreibung der Bilder

- Figur 1:: schematische Darstellung der Herstellung eines Schälfurniers (Verfahrensschritt (1)); dabei ist (a) ein beliebiger Baumstamm; (b) ein Jahresring des Baumstamms (a); (c) ein Druckbalken; (d) ein Messer; (e) ein Schälfurnier (mit der zum Messer (d) zeigenden Innenseite und zum Druckbalken (c) zeigenden Außenseite); (f₁) Faserrichtung des Baumes; (f₂) Radialrichtung des Baumes; (f₃) tangential zu den Jahresringen verlaufende Maserungsrichtung; (R) Rotationsrichtung.
- Figur 2:: schematische Darstellung der Laminierung in Verfahrensschritt (2); (e) Schälfurnier aus Verfahrensschritt (1); (g) Klebeschicht; (f₁) Faserrichtung des Baumes; (f₂) Radialrichtung des Baumes; (f₃) tangential zu den Jahresringen verlaufende Maserungsrichtung.
- Figur 3:: schematische Darstellung des Zerschneidens des Laminates aus Verfahrensschritt (2) im Verfahrensschritt (3); (e) Schälfurnier; (g) Klebeschicht; (f₁) Faserrichtung des Baumes; (f₂) Radialrichtung des Baumes; (f₃) tangential zu den Jahresringen verlaufende Maserungsrichtung; (h) Schnitt senkrecht zur Klebeschicht (g) und der Maserungsrichtung (f₃); (i) Säge; (j) Dicke der Furnierholzmehrschicht; (k) Breite der Furnierholzmehrschicht; (L) Länge der Furnierholzmehrschicht.
- Figur 4:: schematische Darstellung der verschiedenen Jahresring-Zonen und der bevorzugten Anwendungsbereiche der daraus erhältlichen Furnierholzmehrschichten, mit der Bedeutung FB = Fussbodenbelag, AB = Außenbereich, IB = Innenbereich, und BAU = Baubereich
- Figur 5:: schematische Darstellung eines Laminates mit einer weiteren Schicht (m); (e) Schälfurnier; (g) Kleberschicht; (m) weiteren Schicht; (f₁) Faserrichtung des Baumes; (f₂) Radialrichtung des Baumes; (f₃) tangential zu den Jahresringen verlaufende Maserungsrichtung; (k) Breite der Furnierholzmehrschicht; (A) Sichtfläche / Oberfläche / Aufsicht der Furnierholzmehrschicht; Länge der Furnierhoizmehrschicht.
- Figur 6:: schematische Darstellung einer dreidimensional verformten Furnierholzmehrschicht mit einer optischen Wellenstruktur; (e) Schälfurnier; (g) Klebeschicht; (f₁) Faserrichtung des Baumes; (f₂) Radialrichtung des Baumes; (f₃) tangential zu den Jahresringen verlaufende Maserungsrichtung; (k) Breite der Furnierholzmehrschicht; (A) Sichtfläche / Oberfläche / Aufsicht der Furnierholzmehrschicht.
- Figur 7:: schematische Darstellung des Zerschneidens des Laminates gemäß Figur 6 aus Verfahrensschritt (2) Im Verfahrensschritt (3) unter Bildung der erfindungsgemäß eingesetzten Furnierholzmehrschicht.
- Figur 8:: schematische Darstellung einer Furnierholzplatte mit einem Träger umfassend mehrere auf einen Träger aufgebrachte Furnierholzmehrschichten (1 bis 10) gemäß Figur 3; (F) Furnierholzmehrschicht; (g) Kleberschicht; (f₁) Faserrichtung des Baumes; (f₂) Radialrichtung des Baumes; (f₃) tangential zu den Jahresringen verlaufende Maserungsrichtung; (k) Breite der Furnierholzmehrschicht; (j) Dicke der Furnierholzmehrschicht; (T) Träger; (A) Sichtfläche / Oberfläche / Aufsicht auf die Furnierholzplatte.
- Figur 9:: schematische Darstellung einer Furnierholzplatte ohne Träger umfassend zwei um 90° gegeneinander versetzt aufeinander aufgebrachte Furnierholzplatten gemäß Figur 10; (F) Furnierholzmehrschicht; (g) Klebeschicht; (f₁) Faserrichtung des Baumes; (f₂) Radialrichtung des Baumes; (f₃) tangentlal zu den Jahresringen verlaufende Maserungsrichtung; (k) Breite der Furnierholzmehrschicht; (j) Dicke der Furnierholzmehrschicht; (A) Sichtfläche / Oberfläche / Aufsicht auf die Furnierholzplatte
- Figur: 10: schematische Darstellung einer Furnierholzplatte ohne Träger umfassend mehrere aneinandergefügte und über Ihre Kanten miteinander verklebte Furnierholzmehrschichten (1 bis 10) gemäß Figur 3; (F) Furnierholzmehrschicht; (g) Klebeschicht; (f₁) Faserrichtung des Baumes; (f₂) Radialrichtung des Baumes; (f₃) tangential zu den Jahresringen verlaufende Maserungsrichtung; (k) Breite der Furnierholzmehrschicht; (j) Dicke der Furnierholzmehrschicht; (A) Sichtfiäche / Oberfläche / Aufsicht auf die Furnierholzplatte
- Figur: 11: schematische Darstellung einer Furnierholzplatte ohne Träger umfassend mehrere aneinandergefügte und über Ihre Kanten miteinander verklebte dreidimensional verformte Furnierholzmehrschicht mit einer optischen Wellenstruktur (1 bis 10) gemäß Figur 6: (F) Furnierholzmehrschicht; (g) Klebeschicht; (f₁) Faserrichtung des Baumes; (f₂) Radialrichtung des Baumes; (f₃) tangential zu den Jahresringen verlaufende Maserungsrichtung; (k) Breite der Furnierholzmehrschicht; (j) Dicke der Furnierholzmehrschicht; (A) Sichtfläche / Oberfläche / Aufsicht auf die Furnierholzplatte

### Beispiele

### Beispiel 1 Herstellung einer Furnierholzmehrschicht

### (nicht erfindungsgemäß)

### Druckfestigkeit der Furnierholzmehrschicht

Es wurde eine Fumlerholzmehrschicht aus sibirischer Lärche wie folgt hergestellt:

Es wurden Schälfurniere der Dicke 1,5-2,5 mm durch die Rotation eines geschälten Baumstammes der sibirischen Lärche längs seiner Faserrichtung hergestellt. Diese Schälfurniere wurden auf eine Größe von 0,5 x 2,0 m zugeschnitten. Die Schälfurniere wurden Im Anschluss bis zum einem Restfeuchtegehalt von 6 bis 8 % In einer Trockenkammer mit trockener Luft (Luftfeuchtigkelt zwischen 4 bis 5%) über einen Zeitraum von ca, 5 min getrocknet. Ein so entstandenes Schälfurnier wird im Folgenden auch als Referenzschälfurnier bezeichnet.

60 der erhaltenen Schälfurniere wurden unter Verwendung von Dynea Melamin-Harnstoffharzleim laminiert, wobei sich die tangential zu den Jahresringen verlaufende Maserungsrichtung der einzelnen Schälfurniere in die gleiche Richtung erstreckte. Bei der Laminierung wurden die Innen- und Außenseiten der Furniere zuelnander versetzt, d. h. Immer abwechselnd zuelnander, verpresst. Zur Laminlerung wurde der Druck von 15 kg/cm² über einen Zeitraum von 30 min bei einer Temperatur von 70 °C verwendet. Abschließend wurden die erfindungsgemäßen Furnierholzmehrschichten durch die Zerschneidung des erhaltenen Laminates senkrecht zu der Klebeschicht und der tangential zu den Jahresringen verlaufenden Maserungsrichtung mit einer Säge zerschnitten. Die Breite (k) der erfindungsgemäßen Furnierholzmehrschicht betrug 90 mm. Anschließend wurde die Druckfestigkeit über ein dem Fachmann bekanntes Verfahren nach DIN 52 185 bestimmt.

Die erfindungsgemäße Furnierholzmehrschicht mit einer Dichte von 0,67 g/cm³ wies dabei eine Druckfestigkeit/Festigkeitsgrenze senkrecht zu der Richtung der stehenden Jahresringe (f₂) (in Radialrichtung) auf, welche 10 % größer war als die des Referenzschälfurnlers mit einer Dichte von 0,57 g/cm³ bzw. 0,61 g/cm³. Die erfindungsgemäße Furnierholzmehrschicht wies außerdem eine Druckfestigkelt/Festigkeitsgrenze senkrecht zu der durch die Richtungen f₁ und f₂ In den Figuren aufgezogenen Fläche (Tangentialrichtung) auf, welche 58 % größer war als die des Referenzschätfurniers.

### Beispiel 2 Erstellung einer Furnierholzplatte ohne Träger

### (nicht erfindungsgemäß)

In gleicher Weise wie In Beispiel 1 dargestellt wurden Schälfurniere der Dicke 1,9 - 2,1 mm hergestellt und auf eine Größe von 0,5 x 2,5 m zugeschnitten.

60 der erhaltenen Schälfurniere wurden wie in Beispiel 1 dargestellt laminiert, wobei zur Laminierung der Druck von 15 kg/cm² über einen Zeitraum von 14 Stunden bei einer Temperatur von 27 °C ausgeübt wurde.

Die Breite (k) der erfindungsgemäßen Furnierholzmehrschicht betrug 95 mm.

Die Dicke (j) der erfindungsgemäßen Furnierholzmehrschicht betrug 4 mm.

In gleicher Weise wurde eine weitere Furnierholzmehrschicht hergestellt, auf die beim Laminieren ein Druckgradient über die Fläche in Richtung f₂ unter Verwendung eines dreidimensional geformter Druckwerkzeuges (Negativ-Form) ausgeübt wurde, um so eine Furnierholzmehrschicht mit optischer Wellenform zu erhalten,

Anschließend wurden jeweils mehrere solcher Furnierholzmehrschichten nebeneinander angeordnet und über ihre Kanten unter Verwendung eines Klebers mittels Kaltverpressen mit einem Druck von 5 kg/cm² miteinander verklebt. Es wurden Furnierholzplatten (ohne Träger), wie beispielhaft in Figur 10 und 11 dargestellt, mit den Maßen 1220 mm x 2440 mm x 4 mm erhalten.

Anschließend wurde die Druckfestigkeit über ein dem Fachmann bekanntes Verfahren nach DIN 52 185 bestimmt.

Die erfindungsgemäßen Furnierholzplatten (ohne Träger) wiesen dabei eine Druckfestigkeit/Festigkeitsgrenze in Tangentialrichtung, also senkrecht zu der Fläche die durch die Richtungen f₁ und f₂ in den Figuren aufgespannt wird bzw. senkrecht zur Arbeits- oder Oberfläche, auf welche 65-70 % größer war als die des Referenzschälfurniers.

### Beispiel 3

Nach dem Verfahren wie in Beispiel 1 dargestellt, wurde eine Furnierholzmehrschicht hergestellt, die weitere Schichten (m) aus einem elektrisch leitfähigen Material enthält.

Dazu wurden jeweils zwischen zwei Schälfurnierschichten (e) zwei weitere Schichten (m) in Form von Kupferblechen mit einer Dicke von jeweils 0,4 mm Dicke angeordnet und mit einlaminiert. Die Dicke einer solchen Furnierholzmehrschicht mit zwei weiteren Schichten (m) aus Kupferblechen betrug 5 mm.

Die Druckfestigkeit wurde über ein dem Fachmann bekanntes Verfahren DIN 52 185 bestimmt.

Die erfindungsgemäße Furnierholzmehrschicht mit zwei weiteren Schichten (m) aus Kupferblechen wies dabei eine Druckfestigkeit/Festigkeitsgrenze in Tangentlalrichtung (senkrecht zu der Fläche die durch die Richtungen f₁ und f₂ in den Figuren aufgespannt wird) auf, welche um 80-85% größer war als die des Referenzschälfurniers.

## Patentansprüche

1. Furnierholzmehrschicht, umfassend Holz der sibirischen Lärche, wobei die Furnierholzmehrschicht erhältlich ist durch ein Verfahren, umfassend die folgenden Schritte:
(1) Herstellen von mindestens zwei Schälfurnieren (e);
(2) Laminieren der mindestens zwei aus Verfahrensschritt (1) erhaltenen Schälfurniere (e) unter Anbringung einer Kleberschicht (g), welche zwischen den mindestens zwei Schälfurnieren (e) aufgetragen wird, wobei die mindestens zwei Schälfurniere so zueinander angeordnet sind, dass sich die tangential zu den Jahresringen verlaufende Maserungsrichtung der beiden Schälfurniere (f₃) im Wesentlichen in die gleiche Richtung erstreckt und wobei die Laminierung unter Aufbringung eines Drucks von 20 bis 32 kg/cm² erfolgt, indem die mindestens zwei Schälfurniere (e) nach Anbringung der Klebeschicht (g) zusammen In Radialrichtung (f₂), entsprechend der Richtung senkrecht zu der Fläche die durch die Richtungen f₁ und f₃ aufgespannt wird, verpresst werden; und
(3) Schneiden des durch den Verfahrensschritt (2) erhaltenen Laminates im Wesentlichen senkrecht zu der in Verfahrensschritt (2) aufgetragenen Klebeschicht (g) und der tangential zu den Jahresringen verlaufenden Maserungsrichtung der Schälfurniere (f₃), um die Furnierholzmehrschicht zu erhalten,
**dadurch gekennzeichnet, dass** die resultierende Furnierholzmehrschicht eine Dichte von mindestens 5 Im Wesentlichen stehenden Jahresringe pro 1 cm Breite (k) der Furnierholzmehrschicht aufweist und wobei die Breite (k) der Furnierholzmehrschicht als die Ausdehnung der Furnierholzmehrschicht senkrecht zur Klebstoffschicht definiert ist.

2. Furnierholzmehrschicht nach Anspruch 1, **dadurch gekennzeichnet, dass** die Furnierholzmehrschicht eine Dicke (j) von mindestens 1,0 km aufweist.

3. Furnierholzmehrschicht nach einem der Ansprüche 1 oder 2, die zusätzlich zu den Schälfurnierschichten (e) mindestens eine weitere Schicht (m) aus einem von den Schälfurnieren (e) unterschiedlichen Material aufweist, worin die mindestens eine weitere Schicht (m) In Schritt (2) mit den Schälfurnieren (e) unter Anbringung einer Kleberschicht (g) fest verbunden wird.

4. Furnierholzmehrschicht nach Anspruch 3, worin die mindestens eine weitere Schicht (m) aus einem elektrisch leitfähigen Material ausgewählt ist.

5. Furnierholzplatte, bestehend aus einer oder mehreren Furnierholzmehrschichten nach einem der Ansprüche 1 bis 4.

6. Furnierholzplatte, umfassend einen Träger und mindestens eine Furnierholzmehrschicht nach einem der Ansprüche 1 bis 4.

7. Furnierholzplatte nach Anspruch 6, **dadurch gekennzeichnet, dass** der Träger aus Holz und/oder Holzwerkstoffen gefertigt ist.

8. Furnierholzplatte nach einem der Ansprüche 5 bis 7 zur Herstellung von Möbein, Türen, Fußbodenbelägen, Außenverkleidungen, Beleuchtungselementen oder zur Innenausstattung von Räumen.

9. Verfahren zur Herstellung einer Furnierholzmehrschicht, umfassend Holz der sibirischen Lärche, mit einer Dichte von mindestens 5 stehenden Jahresringen pro 1 cm Breite (k) der Furnierholzmehrschicht, wobei die Breite (k) der Furnierholzmehrschicht als die Ausdehnung der Furnierholzmehrschicht senkrecht zur Klebstoffschicht definiert ist, umfassend die folgenden Schritte:
(1) Herstellen von mindestens zwei Schälfurnieren (e);
(2) Laminierung der mindestens zwei aus Verfahrensschritt (1) erhaltenen Schälfurniere (e) unter Anbringung einer Klebeschicht (g), welche zwischen den mindestens zwei Schälfurnieren (e) aufgetragen wird, wobei die mindestens zwei Schälfurniere so zueinander angeordnet sind, dass sich die tangential zu den Jahresringen verlaufende Maserungsrichtung der beiden Schälfurniere (f₃) im Wesentlichen in die gleiche Richtung erstreckt und wobei die Laminierung unter Aufbringung eines Drucks von 20 bis 32 kg/cm² erfolgt, Indem die mindestens zwei Schälfurniere (e) nach Anbringung der Klebeschicht (g) zusammen in Radialrichtung (f₂), entsprechend der Richtung senkrecht zu der Fläche die durch die Richtungen f₁ und f₃ aufgespannt wird, verpresst werden; und
(3) Schneiden des durch den Verfahrensschritt (2) erhaltenen Laminates im Wesentlichen senkrecht zu der in Verfahrensschritt (2) aufgetragenen Klebeschicht (g) und der tangential zu den Jahresringen verlaufenden Maserungsrichtung der Schälfurniere (f₃), um die Furnierholzmehrschicht zu erhalten.

10. Verfahren nach Anspuch 9, worin in Schritt (2) mindestens eine weitere Schicht (m) aus einem von den Schälfurnieren (e) unterschiedlichen Material mit den Schälfurnieren (e) unter Anbringung einer Kleberschicht (g) fest verbunden wird.

11. Verfahren nach einem der Ansprüche 9 oder 10, zusätzlich umfassend einen weiteren Verfahrensschritt (4):
(4) Aufbringen mindestens einer nach Verfahrensschritt (3) erhaltenen Furnierholzmehrschicht auf einen Träger.

12. Verfahren nach Anspruch 11, wobei der Träger aus Holz und/oder Holzwerkstoffen gefertigt Ist.

13. Verfahren nach einem der Ansprüche 9 oder 10, zusätzlich umfassend einen weiteren Verfahrensschritt (4), worin mindestens zwei der Furnierholzmehrschichten gemäß einem der Ansprüche 1 bis 8 nebeneinander angeordnet werden und über Ihre Kanten unter Verpressen unter Erhalt einer Furnierholzplatte miteinander verklebt werden.

14. Verfahren nach Anspruch 13, zusätzlich umfassend einen Schritt, worin mindestens zwei der nach Anspruch 13 erhaltenen Furnierholzplatten aufeinander aufgebracht werden, wobei jeweils jede zweite der aufeinanderliegenden Furnierholzplatten um 90° versetzt gegenüber der darüber liegenden Furnierholzplatte angeordnet Ist und die Jeweils über Ihre Fläche unter Verpressen miteinander verklebt werden.

## Claims

1. Multilayer plywood, comprising wood of the Siberian larch, wherein the multilayer plywood is obtained by a method comprising the following steps:
(1) Production of at least two rotary-cut veneer layers (e);
(2) Lamination of the at least two rotary-cut veneer layers (e) obtained from method step (1) by the application of an adhesive layer (g), which is applied between the at least two rotary-cut veneer layers (e), wherein the at least two rotary-cut veneer layers (e) are arranged in relation to one another in such a way that the direction of the grain running tangentially to the annual rings of both the rotary-cut veneer layers (f₃) extends in essentially the same direction, and wherein the lamination takes place under the imposition of a pressure of 20 to 32 kg/cm², in that the at least two rotary-cut veneer layers (e), after the application of the adhesive layer (g), are pressed together in the radial direction (f₂), corresponding to the direction perpendicular to the surface which is tensioned by the directions f₁ and f₃; and
(3) cutting of the laminate obtained by the method step (2) essentially perpendicular to the adhesive layer (g) applied in method step (2) and to the grain direction of the rotary-cut veneer layers (f₃) running tangentially to the annual rings, in order to obtain the multilayer plywood,
**characterized in that** the resulting multilayer plywood exhibits a density of at least 5 essentially upright annual rings per 1 cm of width (k) of the multilayer plywood, and wherein the width (k) of the multilayer plywood is defined as the expansion of the multilayer plywood perpendicular to the adhesive layer.

2. Multilayer plywood according to claim 1, **characterized in that** the multilayer plywood exhibits a thickness (j) of at least 1 mm.

3. Multilayer plywood according to any one of claims 1 or 2, which, in addition to the rotary-cut veneer layers (e), at least one further layer (m) of a material which is different to the rotary-cut veneer layers (e), wherein the at least one further layer (m) is securely connected in step (2) to the rotary-cut veneers (e) by the application of an adhesive layer (g)

4. Multilayer plywood according to claim 3, wherein the at least one further layer (m) is selected from an electrically conductive material.

5. Plywood board, consisting of one or more rotary-cut veneer layers according to any one of claims 1 to 4.

6. Plywood board, comprising a carrier and at least one multilayer plywood according to any one of claims 1 to 4.

7. Plywood board according to claim 6, **characterized in that** the carrier is produced from wood and/or wood materials.

8. Plywood board according to any one of claims 5 to 7 for the production of furniture items, doors, floor coverings, external claddings, lighting elements, or for the interior fittings of rooms.

9. Method for manufacturing a multilayer plywood, comprising wood from the Siberian larch, with a density of at least 5 essentially upright annual rings per 1 cm of width (k) of the multilayer plywood, wherein the width (k) of the multilayer plywood is defined as the expansion of the multilayer plywood perpendicular to the adhesive layer, comprising the following steps:
(1) Production of at least two rotary-cut veneer layers (e);
(2) Lamination of the at least two rotary-cut veneer layers (e) obtained from method step (1) by the application of an adhesive layer (g), which is applied between the at least two rotary-cut veneer layers (e), wherein the at least two rotary-cut veneer layers are arranged in relation to one another in such a way that the direction of the grain running tangentially to the annual rings of both the rotary-cut veneer layers (f₃) extends in essentially the same direction, and wherein the lamination takes place under the imposition of a pressure of 20 to 32 kg/cm², in that the at least two rotary-cut veneer layers (e), after the application of the adhesive layer (g), are pressed together in the radial direction (f₂), corresponding to the direction perpendicular to the surface which is tensioned by the directions f₁ and f₃; and
(3) cutting of the laminate obtained by the method step (2) essentially perpendicular to the adhesive layer (g) applied in method step (2) and to the grain direction of the rotary-cut veneer layers (f₃) running tangentially to the annual rings, in order to obtain the multilayer plywood.

10. Method according to claim 9, wherein in step (2) at least one further layer (m) of a material different from the rotary-cut veneer layers (e) is securely connected to the rotary-cut veneer layers (e) with the application of an adhesive layer (g)

11. Method according to any one of claims 9 or 10, additionally comprising a further method step (4):
(4) Application of at least one multilayer plywood obtained according to method step (3) onto a carrier.

12. Method according to claim 11, wherein the carrier is produced from wood and/or wood materials.

13. Method according to any one of claims 9 or 10, additionally comprising a further method step (4), wherein at least two of the multilayer plywood layers according to any one of claims 1 to 8 are arranged next to one another, and are adhesively bonded to one another by way of the edges, with the obtaining of a plywood board.

14. Method according to claim 13, additionally comprising a step wherein at least two of the plywood boards obtained according to claim 13 are applied onto one another, wherein in each case every second of the plywood boards lying on top of one another is arranged offset by 90° in relation to the plywood board lying above it, and in each case are adhesively bonded to one another by way of their surfaces, and being pressed together.

## Revendications

1. Contreplaqué multicouche, comprenant du bois de mélèze sibérien, le contreplaqué multicouche pouvant être obtenu par un procédé qui comprend les étapes suivantes :
(1) réalisation d'au moins deux placages déroulés (e) ;
(2) stratification des au moins deux placages déroulés (e) obtenus à l'étape de procédé (1) avec mise en place d'une couche adhésive (g) qui est appliquée entre les au moins deux placages déroulés (e), les au moins deux placages déroulés étant disposés l'un par rapport à l'autre de telle sorte que la direction des veines des deux placages déroulés (f₃) qui est tangentielle aux cernes s'étend essentiellement dans la même direction, et la stratification s'effectuant avec application d'une pression de 20 à 32 kg/cm² par le fait que les au moins deux placages déroulés (e), après l'application de la couche adhésive (g), sont compressés conjointement dans la direction radiale (f₂) conformément à la direction perpendiculaire à la surface qui est définie par les directions f₁ et f₃ ; et
(3) découpe du stratifié obtenu par l'étape de procédé (2) essentiellement perpendiculairement à la couche adhésive (g) appliquée dans l'étape de procédé (2) et à la direction des veines des placages déroulés (f₃) qui est tangentielle aux cernes afin d'obtenir le contreplaqué multicouche,
**caractérisé en ce que** le contreplaqué multicouche résultant présente une densité d'au moins 5 cernes essentiellement verticaux pour 1 cm de largeur (k) du contreplaqué multicouche, et la largeur (k) du contreplaqué multicouche étant définie en tant que dilatation du contreplaqué multicouche perpendiculairement à la couche adhésive.

2. Contreplaqué multicouche selon la revendication 1, **caractérisé en ce que** le contreplaqué multicouche présente une épaisseur (j) d'au moins 1,0 mm.

3. Contreplaqué multicouche selon l'une des revendications 1 ou 2, qui, en plus des placages déroulés (e), présente au moins une autre couche (m) réalisée dans un matériau différent des placages déroulés (e), dans lequel l'autre couche (m) au moins au nombre de un est raccordée de façon fixe dans l'étape 2 aux placages déroulés (e) avec la mise en place d'une couche adhésive (g).

4. Contreplaqué multicouche selon la revendication 3, dans lequel l'autre couche (m) au moins au nombre de un est sélectionnée dans un matériau électriquement conducteur.

5. Plaque de contreplaqué composée d'un ou de plusieurs contreplaqués multicouches selon l'une des revendications 1 à 4.

6. Plaque de contreplaqué, comprenant un support et au moins un contreplaqué multicouche selon l'une des revendications 1 à 4.

7. Plaque de contreplaqué selon la revendication 6, **caractérisée en ce que** le support est fabriqué en bois et/ou en matériaux dérivés du bois.

8. Plaque de contreplaqué selon l'une des revendications 5 à 7 pour la fabrication de meubles, de portes, de revêtements de sol, de revêtements extérieurs, d'éléments d'éclairage ou pour l'équipement intérieur de locaux.

9. Procédé de fabrication d'un contreplaqué multicouche, comprenant du bois de mélèze sibérien, avec une densité d'au moins 5 cernes verticaux pour 1 cm de largeur (k) du contreplaqué multicouche, la largeur (k) du contreplaqué multicouche étant définie en tant que dilatation du contreplaqué multicouche perpendiculairement à la couche adhésive,
comprenant les étapes suivantes :
(1) réalisation d'au moins deux placages déroulés (e) ;
(2) stratification des au moins deux placages déroulés (e) obtenus à l'étape de procédé (1) avec mise en place d'une couche adhésive (g) qui est appliquée entre les au moins deux placages déroulés (e), les au moins deux placages déroulés étant disposés l'un par rapport à l'autre de telle sorte que la direction des veines qui est tangentielle aux cernes des deux placages déroulés (f₃) s'étend essentiellement dans la même direction, et la stratification s'effectuant avec application d'une pression de 20 à 32 kg/cm² par le fait que les au moins deux placages déroulés (e), après l'application de la couche adhésive (g), sont compressées conjointement dans la direction radiale (f₂) conformément à la direction perpendiculairement à la surface qui est définie par les directions f₁ et f₃; et
(3) découpe du stratifié obtenu par l'étape de procédé (2) essentiellement perpendiculairement à la couche adhésive (g) appliquée dans l'étape de procédé (2) et à la direction des veines des placages déroulés (f₃) qui est tangentielle aux cernes afin d'obtenir le contreplaqué multicouche.

10. Procédé selon la revendication 9, dans lequel au moins une autre couche (m) réalisée dans un matériau différent des placages déroulés (e) est raccordée de façon fixe dans l'étape (2) aux placages déroulés (e) avec la mise en place d'une couche adhésive (g).

11. Procédé selon l'une des revendications 9 ou 10, comprenant en plus une autre étape de procédé (4) :
(4) application sur un support d'au moins un contreplaqué multicouche obtenu selon l'étape de procédé (3).

12. Procédé selon la revendication 11, le support étant fabriqué en bois et/ou en matériaux dérivés du bois.

13. Procédé l'une des revendications 9 ou 10, comprenant en plus une autre étape de procédé (4), dans lequel au moins deux des contreplaqués multicouches selon l'une des revendications 1 à 8 sont disposés de façon juxtaposée et sont assemblés par collage sur leur chants, en présence d'une compression, pour obtenir une plaque de contreplaqué.

14. Procédé selon la revendication 13, comprenant en plus une étape, dans lequel au moins deux des plaques de contreplaqué obtenues selon la revendication 13 sont appliquées l'une sur l'autre, une plaque de contreplaqué parmi les deux plaques placées l'une sur l'autre étant disposée de façon décalée de 90° par rapport à la plaque de contreplaqué située au-dessus d'elle, et les plaques respectives étant assemblées l'une à l'autre par collage en présence d'une compression.
